# EUROPEAN PATENT APPLICATION

(11) **EP 4 284 005 A1**
(43) Date of publication of application: **29.11.2023**
(21) Application number: 22758894.4
(22) Date of filing: 23.02.2022
(51) Int. Cl.: H04N 21/439

(54) **VIDEO DUBBING METHOD, RELATED DEVICE, AND COMPUTER READABLE STORAGE MEDIUM**

(30) Priority: 24.02.2021 CN 202110205548
(71) Applicant: Petal Cloud Technology Co., Ltd., Dongguan, Guangdong 523799 (CN)
(72) Inventor: MA, Yu, Shenzhen, Guangdong 518129 (CN); WANG, Weixing, Shenzhen, Guangdong 518129 (CN); MEI, Hao, Shenzhen, Guangdong 518129 (CN)
(74) Representative: Maiwald GmbH
(86) International application number: PCT/CN2022/077496
(87) International publication number: WO 2022/179530

(57) **Abstract**

This application provides a video dubbing method, a related device, and a computer-readable storage medium. The method includes: A first terminal captures a currently displayed video after detecting a capturing and dubbing operation instruction for the currently displayed video, to obtain a captured video clip, and displays a video dubbing control; the first terminal creates and displays a dubbing room for the captured video clip after detecting a trigger operation on the video dubbing control; and when the first terminal learns, through analysis, that a quantity of dubbing roles in the captured video clip is not 0, the first terminal displays a dubbing interface after detecting a first input operation on the dubbing room. According to the foregoing method, a dubbing material may be obtained from a video resource library, and the dubbing material does not need to be uploaded and processed in advance, so that the dubbing material has a wider source, thereby providing better dubbing experience for a user.

## Description

This application claims priority to Chinese Patent Application No. 202110205548.X, filed with the China National Intellectual Property Administration on February 24, 2021 and entitled "VIDEO DUBBING METHOD, RELATED DEVICE, AND COMPUTER-READABLE STORAGE MEDIUM", which is incorporated herein by reference in its entirety.

### TECHNICAL FIELD

This application relates to the field of video dubbing technologies, and in particular, to a video dubbing method, a related device, and a computer-readable storage medium.

### BACKGROUND

As dubbing programs such as *The Sound* come to the front of the stage, a new field of variety shows is opened, bringing new entertainment experience to audiences. In addition, a new method of playing in the pan-entertainment social industry, that is, online dubbing, is also derived.

Currently, there are two types of online video dubbing APPs. A first type is to select a built-in voice line in an APP to automatically synthesize, through text-to-speech conversion, a sound in combination with background music. This type of APP is suitable for scenarios such as short video self-media dubbing, advertising for promotion dubbing, enterprise promotion dubbing, commentary dubbing, and audio reading, and includes a "weipeiyin" APP or the like. A second type is to perform dubbing based on a self-made video material or by using an existing video in an APP, which is interesting. This type of APP is similar to moving *The Sound* online, and includes a "peiyinxiu" APP or the like.

However, a current online video dubbing APP supports only uploaded dubbing materials, and therefore the dubbing material has a limited source.

### SUMMARY

Embodiments of this application provide a video dubbing method, a related device, and a computer-readable storage medium, to resolve a problem that a source of a dubbing material is limited.

According to a first aspect, an embodiment of this application provides a video dubbing method, including: A first terminal captures a currently displayed video after detecting a capturing and dubbing operation instruction for the currently displayed video, to obtain a captured video clip, and displays a video dubbing control; the first terminal creates and displays a dubbing room for the captured video clip after detecting a trigger operation on the video dubbing control; and when the first terminal learns, through analysis, that a quantity of dubbing roles in the captured video clip is not 0, the first terminal displays a dubbing interface after detecting a first input operation on the dubbing room, where the dubbing interface includes a first display box, and the first display box is used to display and play a dubbing material. According to the foregoing method, the first terminal can directly capture a video in a video application to obtain a dubbing material, so that the dubbing material has a wider source, thereby resolving a problem that the source of the dubbing material is limited.

In a possible implementation, after the first terminal creates and displays a dubbing room for the captured video clip after detecting a trigger operation on the video dubbing control, the method includes: The first terminal sends a request message to a network device, where the request message includes an original video ID of the captured video clip, start time of the captured video clip, and end time of the captured video clip; the first terminal receives a first response sent by the network device, where the first response includes information about a quantity of dubbing roles; and the first terminal performs a first operation based on the dubbing role information. In this way, after capturing a video clip, the first terminal can directly create a dubbing room and obtain a dubbing material, without performing complex operations, for example, uploading a video, adding a dubbing role, editing a role subtitle, adding background music, and adding a label, thereby reducing complexity of uploading a dubbing material by a user, and improving dubbing experience of the user.

In a possible implementation, that the first terminal performs a first operation based on the dubbing role information includes:

The first terminal displays first prompt information if the quantity of dubbing roles is 0, where the first prompt information is used to indicate that the captured video clip is unavailable; or if the quantity of dubbing roles is greater than 1, the first terminal sends a first instruction to a second terminal after detecting a second input operation on the dubbing room, where the first instruction is used to instruct a video application account of the second terminal to access the dubbing room; and when the video application account of the second terminal accesses the dubbing room, the first terminal allocates a dubbing role and generates first information, where the first information is used to indicate a correspondence between the dubbing role and a video application account of a terminal accessing the dubbing room; the first terminal sends the first information to the network device; and the first terminal receives the dubbing material sent by the network device, where the dubbing material is obtained by the network device based on the first information. According to the foregoing method, when the quantity of dubbing roles is greater than 1, the first terminal invites another user to enter the dubbing room to perform dubbing, to implement real-time dubbing of a plurality of users, thereby improving dubbing experience of the user.

In a possible implementation, that the first terminal allocates a dubbing role and generates first information includes: The first terminal binds the dubbing role to a video application account of a terminal accessing the dubbing room; the first terminal generates the first information, where the first information is used to indicate a correspondence between the dubbing role and a video application account of a terminal accessing the dubbing room; and the first terminal sends a notification message to the second terminal, where the notification message is used to indicate a dubbing role allocated to the video application account of the second terminal. According to the foregoing method, after the first terminal generates the first information, it is helpful for the network device to generate a dubbing material applied to multi-person dubbing, so that the first terminal can implement online real-time dubbing of a plurality of persons, thereby improving dubbing experience of a user.

In a possible implementation, that the first terminal allocates a dubbing role and generates first information includes: The first terminal sends a second instruction to the second terminal, where the second instruction is used to instruct the video application account of the second terminal to select a dubbing role; the first terminal receives an acknowledgment message sent by the second terminal, where the acknowledgment message is used to indicate a dubbing role selected by the second terminal; and the first terminal generates the first information based on the acknowledgment message, where the first information is used to indicate a correspondence between the dubbing role and a video application account of a terminal accessing the dubbing room. According to the foregoing method, after the first terminal generates the first information, it is helpful for the network device to generate a dubbing material applied to multi-person dubbing, so that the first terminal can implement online real-time dubbing of a plurality of persons, thereby improving dubbing experience of a user.

In a possible implementation, after the first terminal performs a first operation based on the dubbing role information, the method includes: The first terminal pauses a dubbing mode after detecting a third input operation on the dubbing interface, where the dubbing mode is that the first terminal collects external audio in real time as dubbing audio and plays the dubbing material in the first display box; and when the dubbing mode is paused, the first terminal sends a third instruction to the second terminal if the first terminal detects a fourth input operation on the dubbing interface, where the third instruction is used to instruct the video application account of the second terminal to enter a voice call mode. According to the foregoing method, the first terminal enables a voice mode, so that users of terminal devices accessing the dubbing room can have a real-time conversation, thereby improving interaction between the users and improving dubbing experience of the user.

In a possible implementation, after the first terminal performs a first operation based on the dubbing role information, the method includes: The first terminal pauses a dubbing mode after detecting a third input operation on the dubbing interface, where the dubbing mode is that the first terminal collects external audio in real time as dubbing audio and plays the dubbing material in the first display box; when the dubbing mode is paused, the first terminal displays a playback interface if the first terminal detects a fifth input operation on the dubbing interface, where the playback interface includes a second display box; and after detecting a sixth input operation on the playback interface, the first terminal plays back, in the second display box, a first video clip and external audio that is collected by the first terminal and the second terminal in real time in the dubbing mode, where the first video clip is a dubbed video clip in the dubbing material. According to the foregoing method, the first terminal can play back a dubbed video, so that a user can preview a dubbing effect in advance, and the user can adjust a subsequent dubbing policy based on the dubbing effect, thereby improving dubbing experience of the user.

In a possible implementation, after the first terminal displays a dubbing interface after detecting a first input operation on the dubbing room, the method includes: The first terminal displays a preview interface after detecting a seventh input operation on the dubbing interface, where the preview interface includes a third display box, the third display box is used to display a second video clip, and the second video clip is a dubbed video clip in the dubbing material; the first terminal displays a cutting interface after detecting an eighth input operation on the preview interface, where the cutting interface includes a fourth display box, and the fourth display box is used to display the cut second video clip; and after detecting a ninth input operation on the cutting interface, the first terminal cuts the second video clip and the external audio that is collected by the first terminal and the second terminal in real time in the dubbing mode. According to the foregoing method, a user can cut a dubbed video to obtain a personalized dubbed work that meets a requirement, thereby improving dubbing experience of the user.

According to a second aspect, an embodiment of this application provides a video dubbing method, including: A network device receives a request message sent by a first terminal, where the request message includes an original video ID of a captured video clip, start time of the captured video clip, and end time of the captured video clip; the network device finds an original video of the captured video clip from a video resource library based on the original video ID of the captured video clip; the network device obtains a play location of the captured video clip in the original video based on the start time of the captured video clip and the end time of the captured video clip; the network device analyzes a dubbing role in the captured video based on the play location of the captured video clip in the original video, and obtains information about a quantity of dubbing roles; the network device generates a first response based on the information about the quantity of dubbing roles; and the network device sends the first response to the first terminal. According to the foregoing method, when the quantity of dubbing roles is greater than 1, the first terminal can invite a plurality of users to perform online dubbing, to implement online real-time dubbing of a plurality of persons, thereby improving dubbing experience of a user.

In a possible implementation, after the network device generates a first response based on the dubbing role information, the method includes: The network device receives first information sent by the first terminal, where the first information is used to indicate a correspondence between the dubbing role and a video application account of a terminal accessing a dubbing room; the network device captures a video clip corresponding to the captured video clip at the play location in the original video of the captured video clip, to obtain a captured video clip; the network device performs muting processing on an allocated dubbing role in the captured video clip based on the first information, to obtain a dubbing material; and the network device sends the dubbing material to the first terminal. According to the foregoing method, the network device sends the dubbing material to the first terminal, so that after capturing a video clip, the first terminal can directly create a dubbing room and obtain a dubbing material, without performing complex operations, for example, uploading a video, adding a dubbing role, editing a role subtitle, adding background music, and adding a label, thereby reducing complexity of uploading a dubbing material by a user, and improving dubbing experience of the user.

According to a third aspect, an embodiment of this application provides a video dubbing method, including: A second terminal receives a first instruction sent by a first terminal, where the first instruction is used to instruct a video application account of the second terminal to access a dubbing room created by the first terminal; and the second terminal enables, in response to the first instruction, the video application account of the second terminal to access the dubbing room created by the first terminal. According to the foregoing method, a plurality of persons can simultaneously perform online dubbing, and a user no longer speaks to the air during dubbing, thereby improving dubbing experience of the user.

In a possible implementation, after the second terminal accesses, in response to the second request message, the dubbing room created by the first terminal, the method includes: The second terminal receives a notification message sent by the first terminal, where the notification message is used to indicate a dubbing role allocated to the video application account of the second terminal. According to the foregoing method, after the second terminal accessing the dubbing room selects a dubbing role, a network device performs muting processing on the selected role in a to-be-dubbed video clip, and reserves audio of an unselected dubbing role and a background sound of the to-be-dubbed video clip, to ensure richness of dubbing material content to some extent, so that a user has better dubbing experience during dubbing.

In a possible implementation, after the second terminal accesses, in response to the second request message, the dubbing room created by the first terminal, the method includes: The second terminal receives a second instruction sent by the first terminal, where the second instruction is used to instruct the video application account of the second terminal to select a dubbing role; and the second terminal sends an acknowledgment message to the first terminal, where the acknowledgment message is used to indicate a dubbing role selected by the video application account of the second terminal. According to the foregoing method, a user can select a proper dubbing role based on a requirement and an interest of the user, thereby improving dubbing experience of the user.

In a possible implementation, after the second terminal enables, in response to the first instruction, a user account of a video application of the second terminal to access the dubbing room created by the first terminal, the method further includes: The second terminal receives a third instruction sent by the first terminal, where the third instruction is used to instruct the video application account of the second terminal to enter a voice call mode; and the second terminal enables, in response to the third instruction, the video application account of the second terminal to enter the voice call mode. According to the foregoing method, the second terminal enters a voice mode, so that users of terminal devices accessing the dubbing room can have a real-time conversation, thereby improving interaction between the users and improving dubbing experience of the user.

According to a fourth aspect, an embodiment of this application provides a terminal. The terminal may be the first terminal in the first aspect, and includes a memory, a processor, and a touchscreen.

The memory is configured to store a computer program, and the computer program includes program instructions.

The processor is configured to invoke the program instructions, so that the terminal performs the following steps: capturing a currently displayed video after detecting a capturing and dubbing operation instruction for the currently displayed video, to obtain a captured video clip, and indicating the touchscreen to display a video dubbing control; after detecting a trigger operation on the video dubbing control, creating a dubbing room for the captured video clip and indicating the touchscreen to display the dubbing room for the captured video clip; and when learning, through analysis, that a quantity of dubbing roles in the captured video clip is not 0, indicating, after detecting a first input operation on the dubbing room, the touchscreen to display a dubbing interface.

In a possible implementation, after that after detecting a trigger operation on the video dubbing control, the processor creates a dubbing room for the captured video clip and indicates the touchscreen to display the dubbing room for the captured video clip, the following steps are included: sending a request message to a network device by using a communication module; receiving, by using the communication module, a first response sent by the network device; and performing a first operation based on the dubbing role information.

In a possible implementation, that the processor performs a first operation based on the dubbing role information includes: if the quantity of dubbing roles is 0, indicating the touchscreen to display first prompt information; or if the quantity of dubbing roles is greater than 1, sending a first instruction to a second terminal by using the communication module after detecting a second input operation on the dubbing room; and when a video application account of the second terminal accesses the dubbing room, allocating a dubbing role and generating first information; sending the first information to the network device by using the communication module; and receiving, by using the communication module, a dubbing material sent by the network device.

In a possible implementation, that the processor allocates a dubbing role and generates first information includes: binding the dubbing role to a video application account of a terminal accessing the dubbing room; generating the first information; and sending a notification message to the second terminal by using the communication module.

In a possible implementation, that the processor allocates a dubbing role and generates first information includes: sending a second instruction to the second terminal by using the communication module; receiving, by using the communication module, an acknowledgment message sent by the second terminal; and generating the first information based on the acknowledgment message.

In a possible implementation, after the processor performs a first operation based on the dubbing role information, the following steps are included:
pausing a dubbing mode after detecting a third input operation on the dubbing interface; and when the dubbing mode is paused, sending a third instruction to the second terminal by using the communication module after detecting a fourth input operation on the dubbing interface.

In a possible implementation, after the processor performs a first operation based on the dubbing role information, the following steps are included:
pausing a dubbing mode after detecting a third input operation on the dubbing interface; when the dubbing mode is paused, if a fifth input operation on the dubbing interface is detected, indicating the touchscreen to display a playback interface; and after detecting a sixth input operation on the playback interface, indicating the touchscreen to play back, in a second display box, a first video clip and external audio that is collected by the first terminal and the second terminal in real time in the dubbing mode.

In a possible implementation, after the processor indicates, after detecting a first input operation on the dubbing room, the touchscreen to display a dubbing interface, the following steps are included: after detecting a seventh input operation on the dubbing interface, indicating the touchscreen to display a preview interface; and after detecting an eighth input operation on the preview interface, indicating the touchscreen to display a cutting interface; and after detecting a ninth input operation on the cutting interface, cutting a second video clip and the external audio that is collected by the first terminal and the second terminal in real time in the dubbing mode.

According to a fifth aspect, an embodiment of this application provides a network device. The network device may be the network device in the second aspect, and includes a memory, a processor, and a communication module.

The memory is configured to store a computer program, and the computer program includes program instructions.

The processor is configured to invoke the program instructions, so that the network device performs the following steps: receiving, by using the communication module, a request message sent by a first terminal; finding an original video of a captured video clip from a video resource library based on an original video ID of the captured video clip; obtaining a play location of the captured video clip in the original video based on start time of the captured video clip and end time of the captured video clip; analyzing a dubbing role in the captured video based on the play location of the captured video clip in the original video, and obtaining information about a quantity of dubbing roles; generating a first response based on the information about the quantity of dubbing roles; and sending the first response to the first terminal by using the communication module.

In a possible implementation, after the processor generates a first response based on the dubbing role information, the following steps are included:
receiving, by using the communication module, first information sent by the first terminal; capturing a video clip corresponding to the captured video clip at the play location in the original video of the captured video clip, to obtain a captured video clip; performing muting processing on an allocated dubbing role in the captured video clip based on the first information, to obtain a dubbing material; and sending the dubbing material to the first terminal by using the communication module.

According to a sixth aspect, an embodiment of this application provides a terminal. The terminal may be the second terminal in the third aspect, and includes a memory, a processor, a communication module, and a touchscreen.

The memory is configured to store a computer program, and the computer program includes program instructions.

The processor is configured to invoke the program instructions, so that the terminal performs the following steps: receiving, by using the communication module, a first instruction sent by a first terminal; and enabling, in response to the first instruction, a video application account of the terminal to access a dubbing room created by the first terminal.

In a possible implementation, after the processor accesses, in response to the second request message, a dubbing room created by the first terminal, the following step is included: receiving, by using the communication module, a notification message sent by the first terminal.

In a possible implementation, after the processor accesses, in response to the second request message, a dubbing room created by the first terminal, the following steps are included: receiving, by using the communication module, a second instruction sent by the first terminal; and sending an acknowledgment message to the first terminal by using the communication module.

In a possible implementation, after the processor enables, in response to the first instruction, a user account of a video application of the terminal to access a dubbing room created by the first terminal, the following steps are further included: receiving, by using the communication module, a third instruction sent by the first terminal; and enabling, in response to the third instruction, the video application account of the terminal to enter a voice call mode.

According to a seventh aspect, this application provides a terminal. The terminal may be the first terminal in the first aspect, and includes one or more functional modules. The one or more functional modules are configured to perform the video dubbing method according to any one of the possible implementations of the first aspect.

According to an eighth aspect, this application provides a network device. The network device may be the network device in the second aspect, and includes one or more functional modules. The one or more functional modules are configured to perform the video dubbing method according to any one of the possible implementations of the second aspect.

According to a ninth aspect, this application provides a terminal. The terminal may be the second terminal in the third aspect, and includes one or more functional modules. The one or more functional modules are configured to perform the video dubbing method according to any one of the possible implementations of the third aspect.

According to a tenth aspect, an embodiment of this application provides a computer storage medium, including computer instructions. When the computer instructions are run by an electronic device, a communication apparatus is enabled to perform the video dubbing method according to any one of the possible implementations of any one of the foregoing aspects.

According to an eleventh aspect, an embodiment of this application provides a computer program product. When the computer program product is run by a computer, the computer is enabled to perform the video dubbing method according to any one of the possible implementations of any one of the foregoing aspects.

### BRIEF DESCRIPTION OF DRAWINGS

FIG. 1A is a diagram of a home screen of a terminal according to an embodiment of this application;
FIG. 1B to FIG. 1D are diagrams of a video application interface according to an embodiment of this application;
FIG. 1E to FIG. 1G are diagrams of a video capturing interface of a video application according to an embodiment of this application;
FIG. 2A to FIG. 2E are diagrams of a dubbing room interface according to an embodiment of this application;
FIG. 3A to FIG. 3D are diagrams of a dubbing interface of a first terminal according to an embodiment of this application;
FIG. 3E is a diagram of a dubbing playback interface according to an embodiment of this application;
FIG. 3F is a diagram of another dubbing interface of a first terminal according to an embodiment of this application;
FIG. 4 is a diagram of a dubbing interface of a second terminal according to an embodiment of this application;
FIG. 5A to FIG. 5C are diagrams of a preview interface of a first terminal according to an embodiment of this application;
FIG. 6 is a diagram of a personal dubbing home page interface according to an embodiment of this application;
FIG. 7 is a flowchart of a video dubbing method according to an embodiment of this application;
FIG. 8 is a diagram of a procedure for creating a dubbing room according to an embodiment of this application;
FIG. 9 is a diagram of a procedure for communication between a first terminal and a network device according to an embodiment of this application;
FIG. 10 is a schematic diagram of a structure of a first terminal according to an embodiment of this application; and
FIG. 11 is a block diagram of a software structure of a first terminal according to an embodiment of this application.

### DESCRIPTION OF EMBODIMENTS

The following clearly describes in detail the technical solutions in embodiments of this application with reference to the accompanying drawings. In the descriptions of embodiments of this application, unless otherwise specified, "/" means "or". For example, "A/B" may indicate A or B. In this specification, "and/or" is merely an association relationship for describing associated objects, and indicates that three relationships may exist. For example, "A and/or B" may indicate the following three cases: Only A exists, both A and B exist, and only B exists. In addition, in the descriptions of embodiments of this application, "a plurality of' means two or more.

The following terms "first" and "second" are merely used for the purpose of description, and cannot be understood as an implication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more.

In the embodiments of this application, a first terminal and a second terminal may be communication devices such as a smartphone, a tablet computer, and a smartwatch, and a network device may be a server such as a video server.

The following describes a video dubbing method in the embodiments of this application with reference to an application scenario.

In some application scenarios, the first terminal may be a terminal device such as a smartphone, a tablet computer, or a notebook computer. In the embodiments of this application, an example in which the smartphone is a first terminal 100 is used as an example for description. When playing a video by using video playing software, the first terminal 100 receives an operation of capturing a video by a user. After successfully capturing the video, the first terminal 100 sends a captured and stored video clip to a network device. After parsing and processing the captured video clip, the network device generates a dubbing clip and sends the dubbing clip to a video client of the first terminal 100, to provide a video dubbing service for the user. Compared with conventional dubbing software, a dubbing material of the first terminal 100 may be a captured clip in the video playing software, and the dubbing material has a wider source.

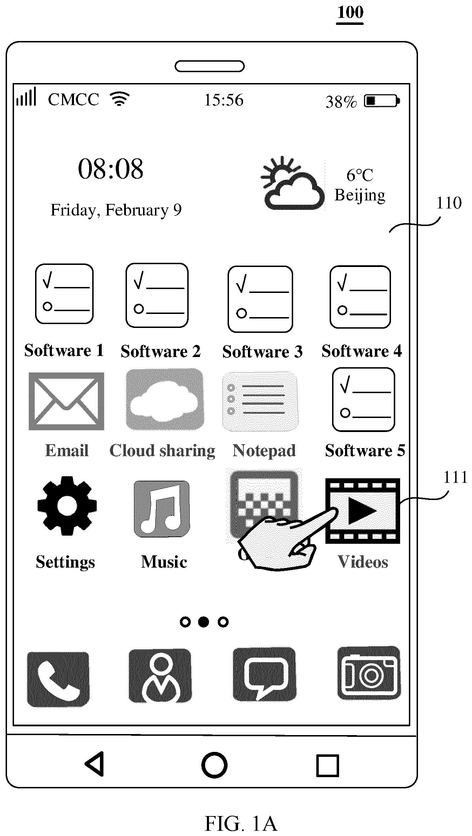

For example, as shown in FIG. 1A, the first terminal 100 may display an interface 110 of a home screen. The interface 110 displays a page on which an application icon is placed. The page includes a plurality of application icons (for example, a Settings application icon, a Music application icon, a Notepad application icon, a Cloud sharing application icon, a Video application icon 111, and a Cloud sharing application icon). A page indicator is further displayed below the plurality of application icons, to indicate a location relationship between the currently displayed page and another page. There are a plurality of tray icons (for example, a Phone application icon, a Messaging application icon, a Contacts application icon, and a Camera application icon) below the page indicator, and the tray application icons remain displayed during page switching. In some embodiments, the page may alternatively include a plurality of application icons and a page indicator. The page indicator may not be a part of the page, and may exist independently. The icons are also optional. This is not limited in this embodiment of this application.

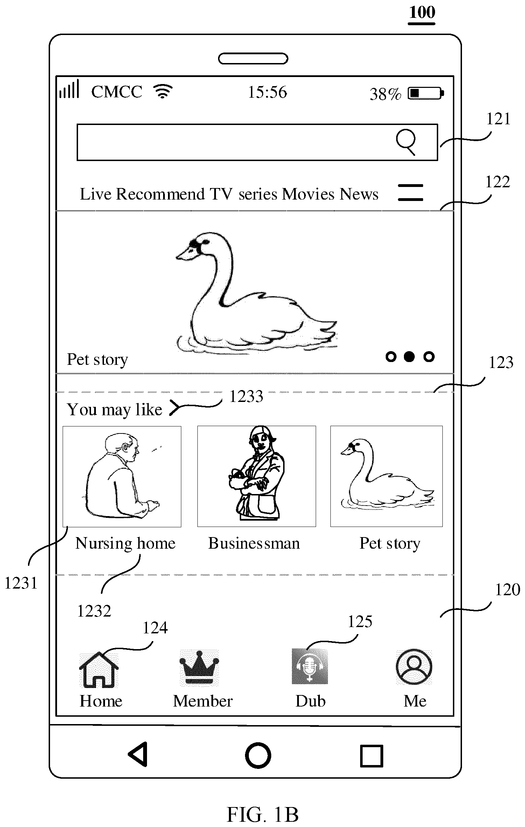

The first terminal 100 may receive an input operation (for example, a tap) performed by a user on the Video application icon 111, and in response to the input operation, the first terminal 100 may display a video main interface 120 shown in FIG. 1B.

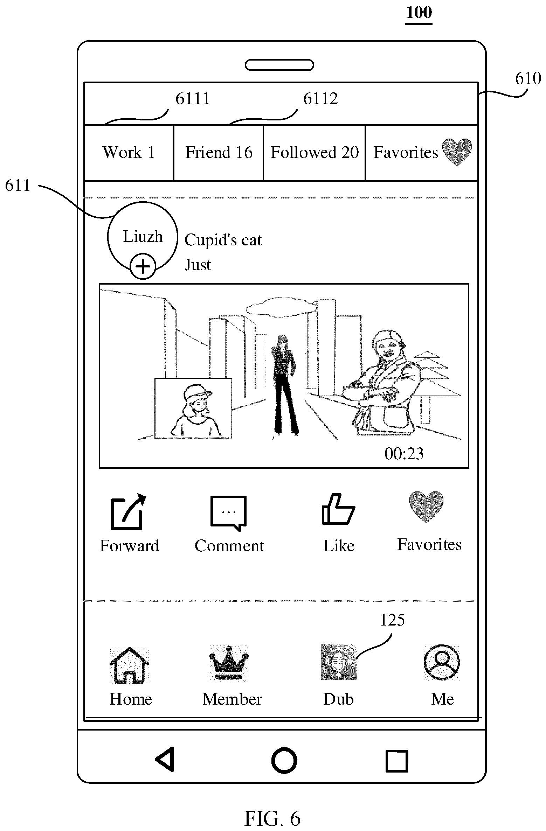

As shown in FIG. 1B, the video main interface 120 includes a video searching box 121 and a recommended video display box 122. The video searching box 121 is used to, when the first terminal 100 detects an external input operation (for example, inputting a character), search a video library for a video corresponding to a character in the video searching box 121. The recommended video display box 122 includes a recommended video display page. The recommended video display page is used to display a recommended video to a user. Pushing of the recommended video may be determined based on a score obtained after the user watches the video, or may be determined based on a play amount of the video. This is not limited in this embodiment of this application. The recommended video display page includes a page indicator to indicate a location relationship between a current recommended video display page and another recommended video display page, and the page indicator remains displayed during switching of the recommended video display page. The video main interface 120 further includes a personalized video display area 123. The personalized video display area 123 is used by the first terminal 100 to display, to a user based on historical video viewing data of the user and big data, a video that meets a viewing requirement of the user. The personalized video display area 123 includes a "You may like" control 1231, a pushed video display box 1232, and a pushed video name icon 1233. A plurality of tray application icons (for example, a Home icon 124, a Member application icon, a Dub application icon 125, and a Me application icon) exist at a bottom of the video main interface 120, and the tray application icons remain displayed during page switching of the video main interface. When the device 100 detects an input operation (for example, a tap) performed by a user on the tray application icons, the first terminal 100 displays different main interfaces in response to the operation of the user. For example, when the first terminal 100 detects a tap operation performed by a user on the Home icon 124, the first terminal 100 displays the video main interface 120 in response to the tap operation of the user. When the first terminal 100 detects an input operation (for example, a tap) performed on the Dub application icon 125, the first terminal 100 displays a personal dubbing home page shown in FIG. 6. In some embodiments, the video main interface may include a plurality of tray application icons, and the tray application icons are optional. The recommended video display box, the personalized video display area, and the control and the icon in the personalized video display area in the video main interface are also optional. This is not limited in this embodiment of this application.

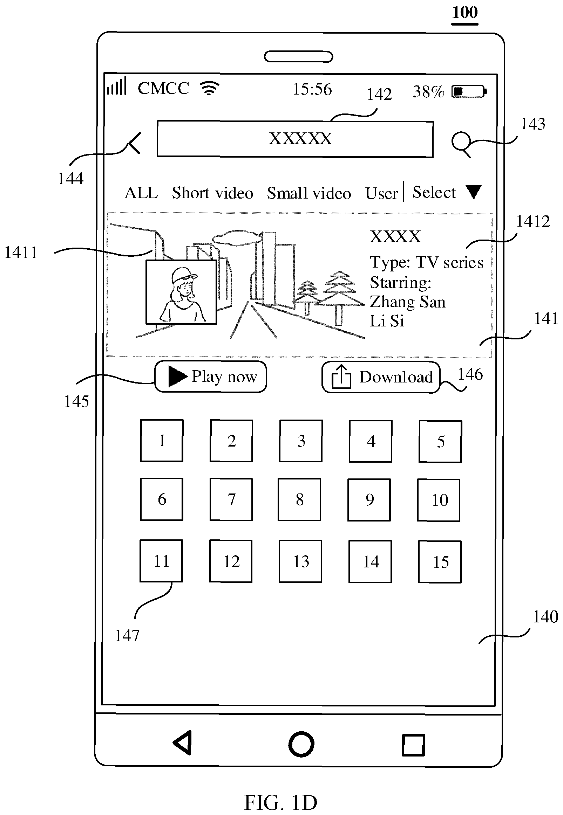

After the first terminal 100 detects an input operation performed by a user on the video searching box 121, the first terminal 100 displays a keyboard input box in the video main interface 120 in response to the input operation. The first terminal 100 may detect an input operation (for example, a tap) performed by a user on the keyboard input box, and in response to the operation performed on the keyboard input box, the first terminal 100 displays, in the video searching box, a character output by the user by using the keyboard input box. The first terminal 100 detects an input operation such as a tap performed by a user on a search icon 129. In response to the input operation, the first terminal 100 searches a video resource library for a target video input by the user, and displays a search result interface 140 shown in FIG. 1D.

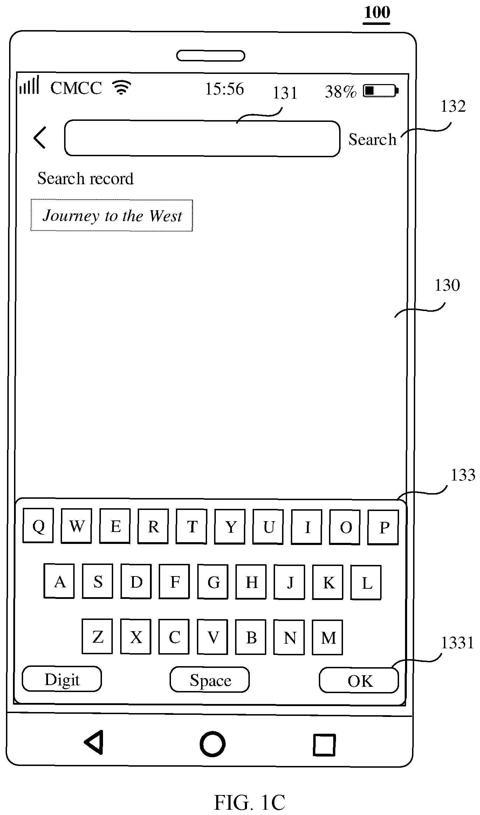

In a possible implementation, the first terminal 100 may receive an input operation such as a tap performed by a user on the video searching box 121 in FIG. 1B. In response to the input operation, the first terminal 100 may display a video searching interface 130 shown in FIG. 1C.

As shown in FIG. 1C, the video searching interface 130 includes a search box 131 and a search control 132, and a search record of a user is displayed below the search box 131. After the first terminal 100 detects an input operation such as a tap performed by a user on the search box 131, the first terminal 100 displays a keyboard input box 133 in the video searching interface 130 in response to the input operation. When the first terminal 100 detects an input operation such as a tap performed by a user on the keyboard input box 133, in response to the input operation, the first terminal 100 displays, in the search box 131, a character that is input by the user based on the keyboard input box 133. After the first terminal 100 detects an input operation performed by a user on the search control 132 or an input operation such as a tap performed by a user on an OK control 1331 in the keyboard input box 133, in response to the input operation, the first terminal 100 searches the video resource library for a target video corresponding to the character in the search box 131, and displays the search result interface 140 shown in FIG. 1D. In some embodiments, a search history display area in the video searching interface is optional. This is not limited in this embodiment of this application.

As shown in FIG. 1D, the search result interface 140 includes a video display area 141, a search box 142, a search control 143, a return control 144, a play control 145, a download control 146, and a plurality of episode selection controls 147. The video display area 141 includes a first display area 1411 and a second display area 1412. The first display area is used to display a cover of a searched target video, and the second display area is used to display information about the searched target video (for example, a video name, a video type, and a performer participating in the video). After the first terminal 100 detects an input operation perform on the return control 144, in response to the operation, the first terminal 100 may display a previous display interface (for example, the video searching interface 130 or the video main interface 120), or may display an interface 110. This is not limited in this embodiment of this application. After the first terminal 100 detects an input operation such as a tap performed by a user on the search box 142, for a response made by an electronic device to the input operation, refer to a response made by the first terminal 100 to an operation performed by a user on the search box 142 in FIG. 1C in the foregoing embodiment or a response made by the first terminal 100 to an input operation performed by a user on the video searching box 121. Details are not described again in this embodiment of this application. After the first terminal 100 detects an input operation such as a tap performed by a user on the play control 145, in response to the input operation, the electronic device starts to play the target video from a start moment. In an optional manner, when the first terminal 100 detects an input operation such as a tap performed by a user on the play control 145, in response to the operation, the electronic device starts to play, based on historical data, the target video from a historical moment at which the user views the target video last time. After the first terminal 100 detects an input operation performed by a user on the download control 146, if the first terminal 100 detects an input operation such as a tap performed by the user on the episode selection control 147, in response to the input operation of the user, the first terminal 100 downloads a video selected by the user. When the first terminal 100 detects no input operation performed by a user on the download control 146, if the first terminal 100 detects an input operation such as a tap performed by the user on the episode selection control 147, the first terminal 100 plays a video of an episode corresponding to the episode selection control 147.

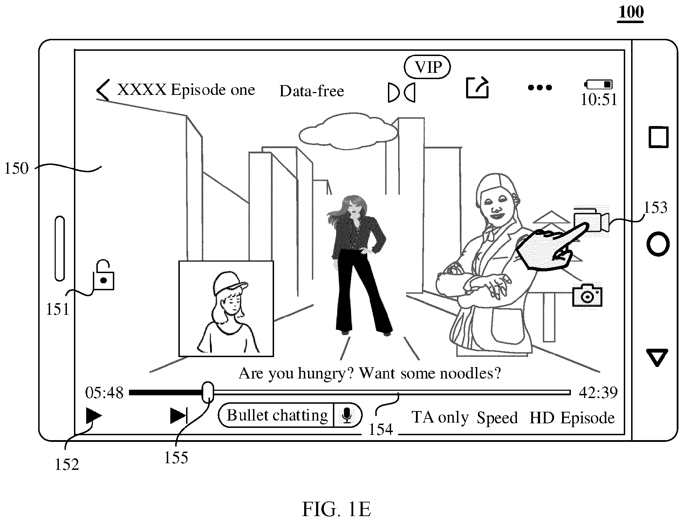

This embodiment of this application is described by using an example in which the first terminal 100 responds to an input operation performed by a user on the play control 145. After detecting the input operation such as a tap performed by the user on the play control 145, the first terminal 100 starts to play a target video from a start moment, and displays a video playing interface 150 shown in FIG. 1E.

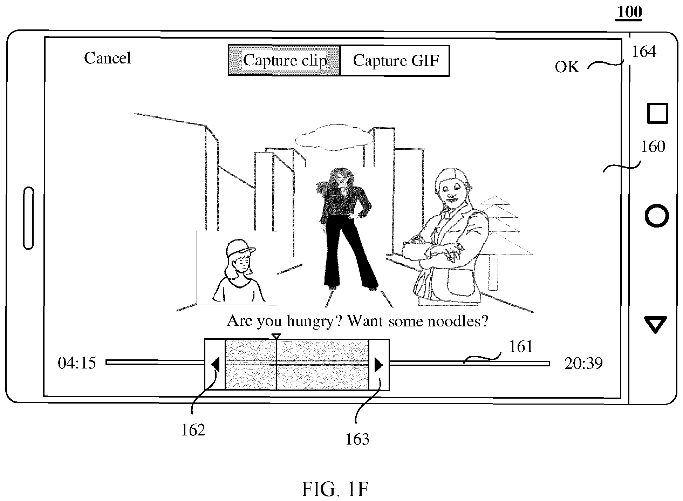

As shown in FIG. 1E, the video playing interface 150 is used to display a video that is being played, and includes a screen locking control 151, a play/pause control 152, a video capturing control 153, and a progress adjustment control 155. A left side of a time progress bar 154 may display current video playing duration, and a right side of the time progress bar 154 may display total duration of a currently played video. As the video is played, the progress adjustment control 155 on the time progress bar 154 slides from left to right. When the progress adjustment control 155 slides to a rightmost end of the time progress bar 154, video playing ends. When the first terminal 100 detects an input operation (for example, sliding left or sliding right) performed by a user on the progress adjustment control 155, the first terminal 100 starts to play a video from a moment corresponding to a location of the progress adjustment control 155 on the time progress bar 154. When the video is in a played state, if the first terminal 100 detects an input operation such as a tap performed by a user on the play/pause control 152, in response to the input operation, the first terminal 100 pauses the video and sets a function of the play/pause control 152 to a video playing function (that is, when the first terminal 100 detects the input operation on the play/pause control 152 again, the first terminal 100 plays the video). When the video is in a playing paused state, if the first terminal 100 detects an input operation such as a tap performed by a user on the play/pause control 152, in response to the input operation, the first terminal 100 plays the video and sets a function of the play/pause control 152 to a video pausing function (that is, when the first terminal 100 detects the input operation on the play/pause control 152 again, the first terminal 100 pauses video playing). The video capturing control 153 may be used by the first terminal 100 to capture a clip of a currently played video. When the first terminal 100 detects an input operation such as a tap performed by a user on the video capturing control 153, the first terminal 100 may display a video clip capturing interface 160 shown in FIG. 1F. In some embodiments, in addition to the foregoing controls, the video playing interface 150 further includes other controls. These controls are all optional, and are merely used as examples for description rather than a limitation in this embodiment of this application.

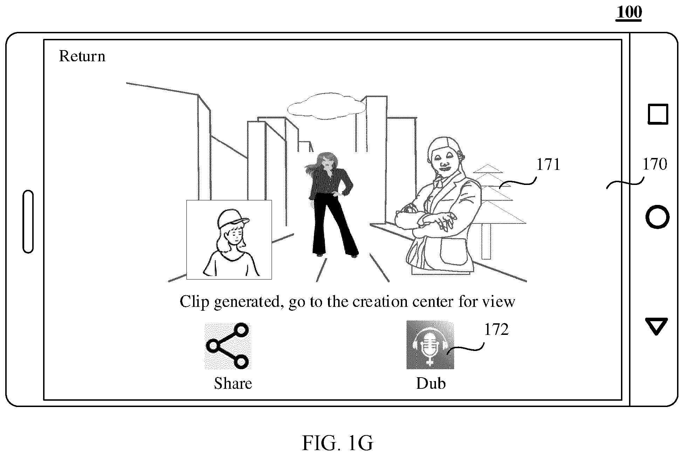

As shown in FIG. 1F, the video clip capturing interface 160 includes a time progress bar 161, a first capture control 162, and a second capture control 163. When the first terminal 100 detects an input operation (for example, sliding left or sliding right) performed by a user on the first capture control 162, the first terminal 100 displays a video frame image at a moment corresponding to a location of the first capture control 162 on the time progress bar 161, and a left side of the time progress bar 161 displays the moment corresponding to the location of the first capture control 162 on the time progress bar 161. Similarly, when the first terminal 100 detects an input operation (for example, sliding left or sliding right) performed by a user on the second capture control 163, the first terminal 100 displays a video frame image at a moment corresponding to a location of the second capture control 163 on the time progress bar 161, and the left side of the time progress bar 161 displays the moment corresponding to the location of the second capture control 163 on the time progress bar 161. When the first terminal 100 detects an input operation (for example, a tap) performed by a user on an OK control 164, the first terminal 100 cuts an original video by using the moment (04:15 in FIG. 1F) corresponding to the location of the first capture control 162 on the time progress bar 161 as a cutting start point, and using the moment (20:39 in FIG. 1F) corresponding to the location of the second capture control 163 on the time progress bar 161 as a cutting end point, to obtain a cut video. In some embodiments, in the video clip capturing interface, a location for displaying the moment corresponding to the location of the first control on the time progress bar and a location for displaying the moment corresponding to the location of the second capture control on the time progress bar are variable. This is not limited in this embodiment of this application. After cutting the video, the first terminal 100 displays a dubbing selection interface 170 shown in FIG. 1G.

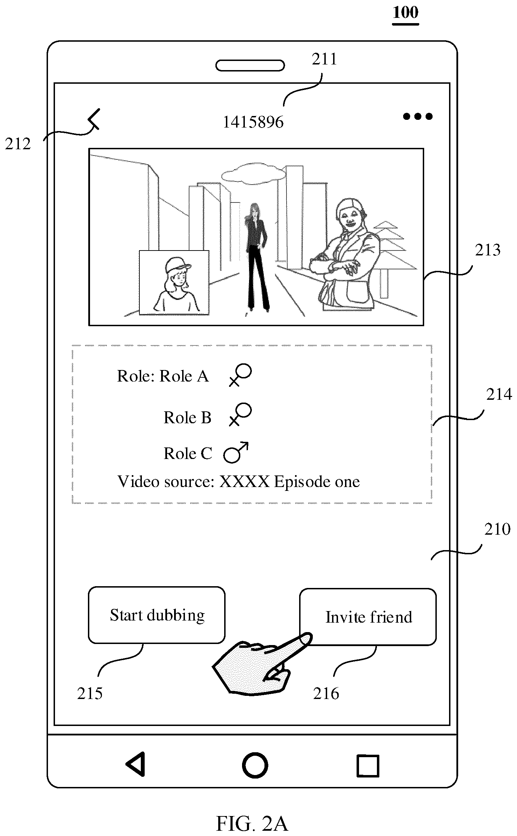

As shown in FIG. 1G, the dubbing selection interface 170 includes a captured video clip display area 171 and a plurality of application icons (for example, a Share application icon and a Dub application icon 172). In some embodiments, the application icon in the dubbing selection interface is optional. In this embodiment of this application, only two application icons are listed as examples for description. Selection of the application icon is not limited in this embodiment of this application. The captured clip display area 171 is used to display a cover of a captured video clip. The first terminal 100 may detect an input operation (for example, a tap) performed by a user on the Dub application icon 172. After the electronic device detects the input operation, the first terminal 100 performs the input operation, creates a dubbing room, and displays a first interface 210 of the dubbing room shown in FIG. 2A.

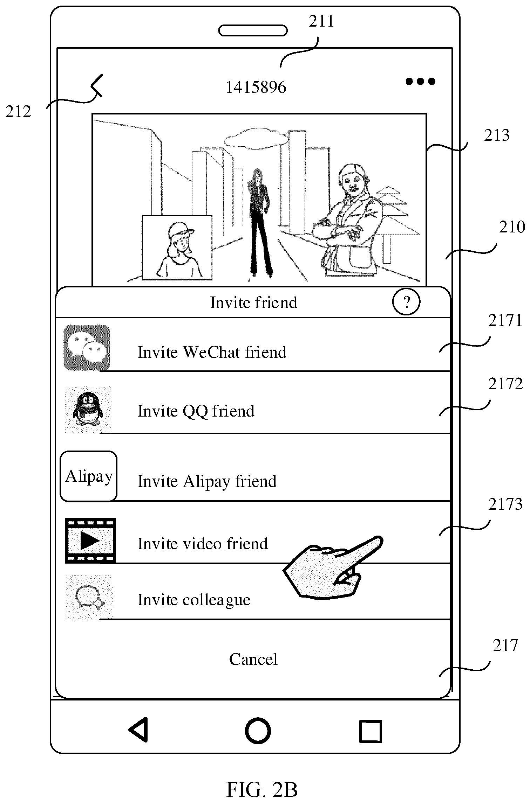

As shown in FIG. 2A, the first interface 210 of the dubbing room includes a dubbing room ID icon 211, a return control 212, a display area 213, and an information display box 214. The dubbing room ID icon 211 displays an ID number of a current dubbing room, where an ID of the dubbing room is unique and is used to distinguish the current dubbing room from another dubbing room. The display area 213 is used to display a cover of a dubbing material, where the dubbing material is the foregoing captured video clip. The information display box 214 is used to display information about the dubbing material (for example, information such as a dubbing role name, a dubbing role gender, and a source of the dubbing material). The first interface 210 of the dubbing room further includes a start dubbing control 215 and a friend invitation control 216. When the first terminal 100 detects that a quantity of dubbing roles in the dubbing material is one, the first terminal 100 does not detect an input operation performed by a user on the friend invitation control 216. When the first terminal 100 detects that the quantity of dubbing roles in the dubbing material is equal to one, and the first terminal 100 detects no input operation performed by a user on the friend invitation control 216, if the first terminal 100 detects an input operation on the start dubbing control 215, the first terminal 100 displays a second interface of the dubbing room in response to the input operation, where the second interface of the dubbing room is a single-person dubbing interface. When the first terminal 100 detects that the quantity of dubbing roles in the dubbing material is greater than one, after the first terminal 100 detects an input operation on the friend invitation control 216, the first terminal 100 displays, in the first interface 210 of the dubbing room, a friend invitation information box 217 shown in FIG. 2B.

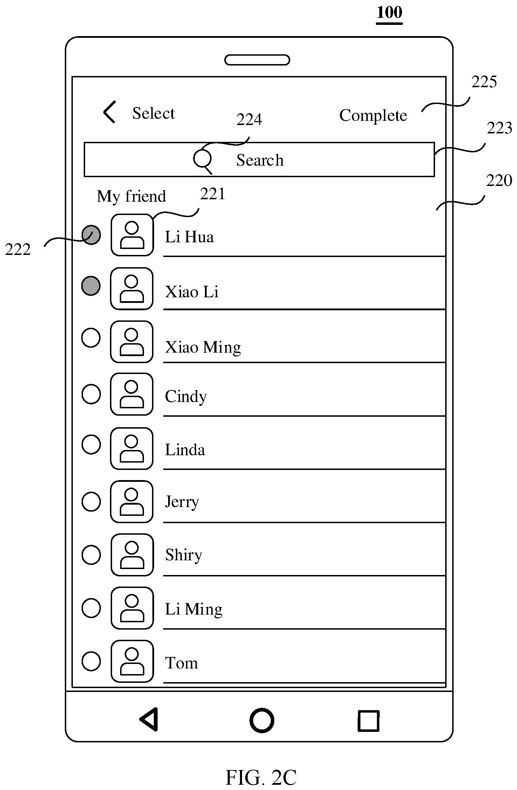

As shown in FIG. 2B, the friend invitation information box 217 includes other controls such as a WeChat friend invitation control 2171, a QQ friend invitation control 2172, and a video friend invitation control 2173. When the first terminal 100 detects an input operation (for example, a tap) on the WeChat friend invitation control 2171 and the QQ friend invitation control 2172, a home screen of the first terminal 100 displays a friend list interface of communication software such as WeChat or QQ. When the first terminal 100 detects an input operation on the friend list interface, the first terminal 100 sends a dubbing request link to a second terminal 200, where the second terminal 200 is a terminal device such as a smartphone or a tablet computer of a friend selected from the friend list. After the second terminal 200 detects an input operation (for example, a tap) on the dubbing request link, the second terminal 200 detects an installed video application, and starts the video application. After detecting an input operation of logging in to the video application by using a social account such as WeChat or QQ, the second terminal 200 logs in to the video application and enters the dubbing room. This embodiment of this application is described by using an example in which the first terminal 100 detects an input operation (for example, a tap) on the video friend invitation control 2173, and the first terminal 100 responds to the input operation to display a friend list interface 220 shown in FIG. 2C.

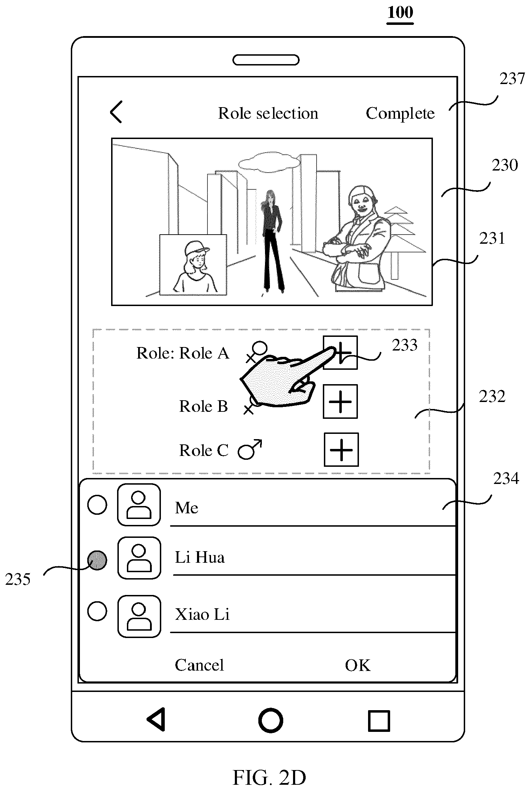

As shown in FIG. 2C, the friend list interface 220 includes a plurality of friend display boxes 221, and each friend display box includes a friend name, a friend icon, and a selection control 222. When the first terminal 100 detects an input operation (for example, a tap) on the selection control 222, the first terminal 100 selects a friend. In addition, the friend list interface 220 further includes a search box 223 and a search icon 224, so that after the first terminal 100 detects an input operation on the search box 233 and the search icon 224, the first terminal 100 searches a friend list for a corresponding friend user name in the search box 223. In FIG. 2C, after the first terminal 100 detects an input operation on selection controls corresponding to a user Li Hua and a user Xiao Li, the first terminal 100 responds to the input operation to send a dubbing link to electronic devices 200 of the user Li Hua and the user Xiao Li, so that video applications in the second electronic devices of Li Hua and Xiao Li can access the dubbing room. After the first terminal 100 detects a complete control 225 in the friend list interface 220, the first terminal 100 enters a role selection interface 230 shown in FIG. 2D.

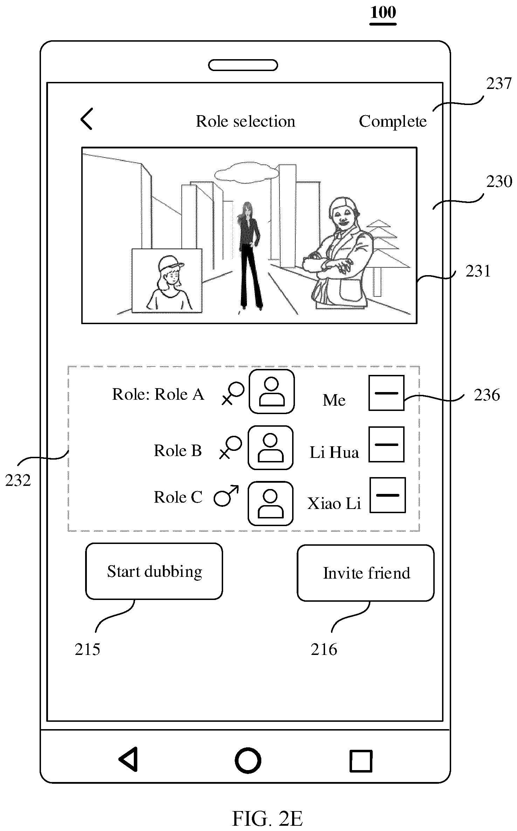

As shown in FIG. 2D, after the first terminal 100 detects that video applications in second terminals 200 of invited friends all access the dubbing room, the first terminal 100 displays the role selection interface 230. The role selection interface 230 includes a display area 231 and a role selection function area 232. The display area 231 is used to display a cover image of a dubbing material, and the role selection function area 232 is used to allocate a dubbing role. In FIG. 2D, the role selection function area 232 displays information about a dubbing role, such as a name and a gender, and each dubbing role corresponds to a role allocation control 233. When the first terminal 100 detects an input operation (for example, a tap) performed by a user on the role allocation control 233, the first terminal 100 displays a user selection box 234 in the role selection interface 230. The user selection box 234 displays a name and a profile picture of a user participating in dubbing. The user selection box 234 includes a plurality of selection controls 235, and each selection control 235 corresponds to a user. When the first terminal 100 detects an input operation (for example, a tap) on the selection control 235, the first terminal 100 allocates a dubbing role to a user corresponding to the selection control, and displays a role selection interface shown in FIG. 2E. For example, in FIG. 2D, after the first terminal 100 detects an input operation on the role allocation control 233 for a role B, in response to the operation, the first terminal 100 displays the user selection box 234, and displays, in the user selection box 234, a name and a profile picture of a user entering the dubbing room. After detecting a tap operation on the selection control 235 corresponding to the user Li Hua, the first terminal 100 allocates the role B to the user Li Hua in response to the tap operation.

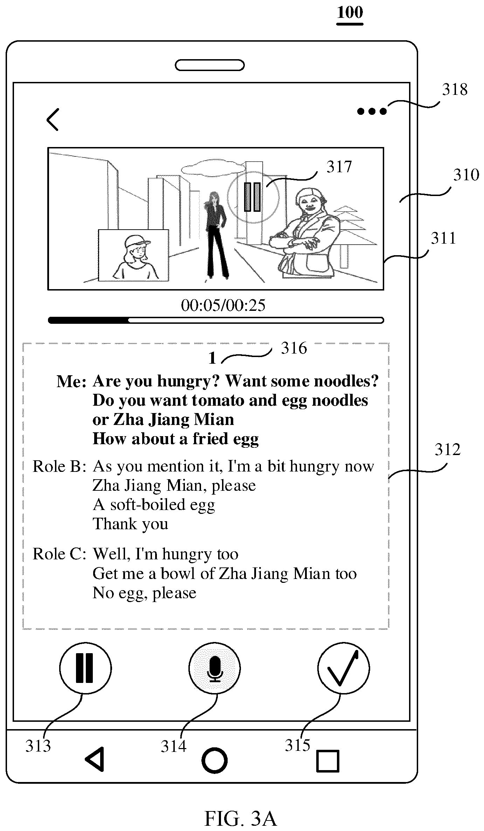

In FIG. 2E, after the first terminal 100 detects and responds to an operation of allocating a dubbing role to a user, the first terminal 100 displays, in the role selection function area 232, a user to which a role has been allocated, and each user to which a role has been allocated corresponds to a cancel control 236. When the first terminal 100 detects an input operation such as a tap performed by a user on the cancel control 236, in response to the input operation, the first terminal 100 cancels a dubbing role allocated to the user, removes information such as a profile picture and a user name of the user from the role selection function area 232, and replaces the cancel control 236 with the role allocation control 233. As shown in FIG. 2E, after the first terminal 100 responds to an input operation related to dubbing role allocation, and the first terminal 100 detects an input operation such as a tap on the start dubbing control 215, the first terminal 100 responds to the input operation to display a dubbing interface 310 of the dubbing room shown in FIG. 3A.

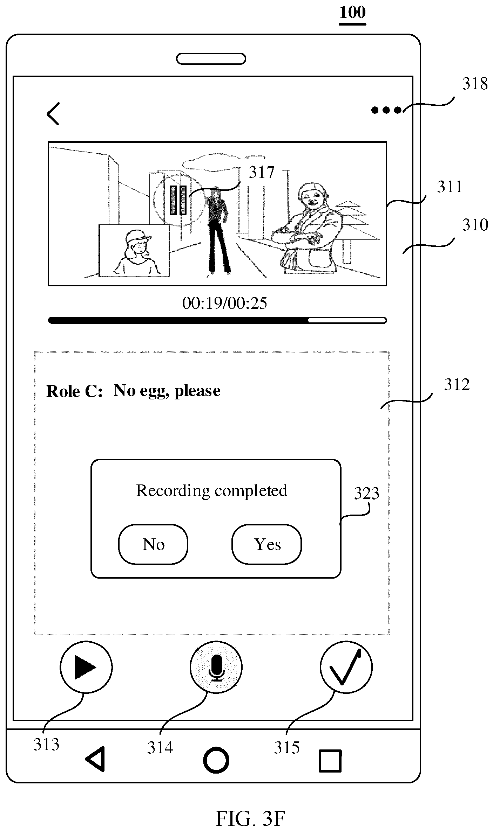

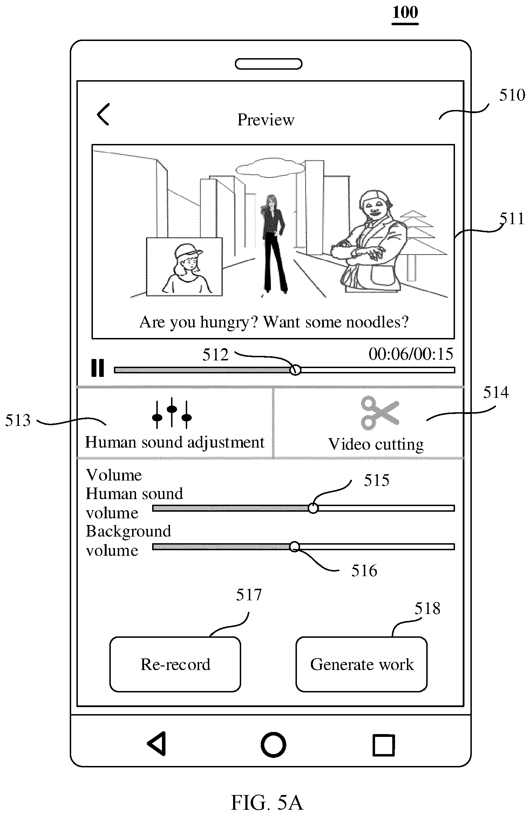

As shown in FIG. 3A, the dubbing interface 310 includes a dubbing clip display area 311, a subtitle display area 312, a play/pause control 313, a dubbing control 314, and a submit control 315. When the first terminal 100 detects an input operation such as a tap performed by a user on the play/pause control 313, the first terminal 100 starts a dubbing mode in response to the input operation, to be specific, the first terminal plays a dubbed video in the dubbing clip display area 311, displays a subtitle in a scrolling manner in the subtitle display area 312, collects external audio in real time, and sets a function of the play/pause control 313 to a dubbing pause function. When a dubbing role changes, prompt information 316 is displayed in the subtitle display area 312, where the prompt information 316 is used to indicate preparation time of the to-be-dubbed sound. When the first terminal 100 detects an input operation such as a tap on the dubbing control 314, the first terminal 100 receives and stores a voice of a user in response to the input operation. In a process in which the first terminal 100 is in the dubbing mode, if the first terminal 100 detects an input operation such as a tap on the play/pause control 313, in response to the input operation, the first terminal 100 pauses the dubbing mode, sets a function of the play/pause control 313 to a start dubbing function, and displays a pause icon 317 in the dubbing clip display area 311. After detecting an input operation on the submit control 315, the first terminal 100 displays, in the dubbing display interface 310, a complete prompt box 323 shown in FIG. 3F. When detecting an input operation performed by a user on a "Yes" control, the first terminal 100 displays a preview interface 510 shown in FIG. 5A.

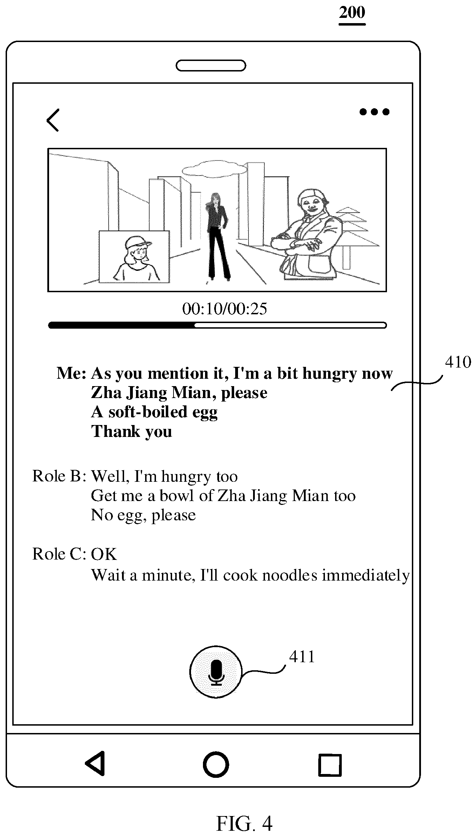

In this embodiment of this application, the first terminal 100 is a device creating a dubbing room, and an electronic device of another user invited by the first terminal 100 is the second terminal 200. A dubbing interface of the second terminal 200 is a dubbing interface 410 shown in FIG. 4. The dubbing interface 410 includes a dubbing control 411. When the second terminal 200 detects an input operation such as a tap on the dubbing control 411, the second terminal 200 receives and stores a voice of a user in response to the input operation.

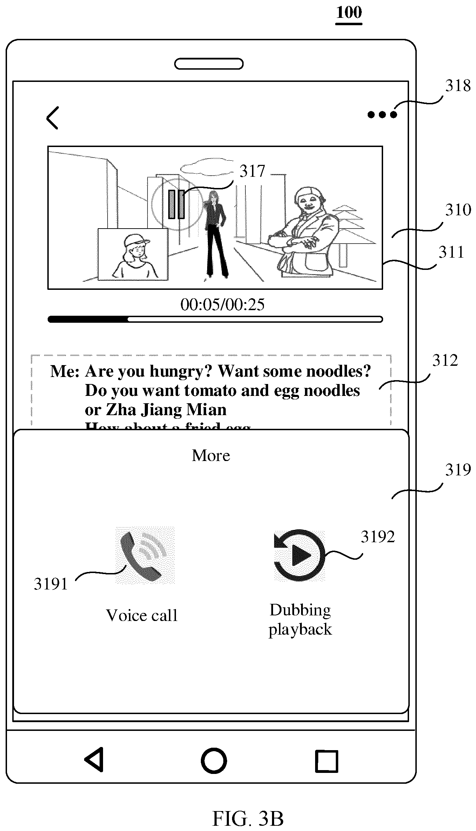

When the first terminal 100 detects an input operation such as a tap on the play/pause control 313 or the pause control 317, the first terminal 100 recovers the dubbing mode of the dubbing room, and the first terminal 100 and the second terminal 200 continue to collect external audio in real time. When the dubbing mode is paused, if the first terminal 100 detects an input operation such as a tap on a more-function control 318, a more-operation function box 319 shown in FIG. 3B is displayed.

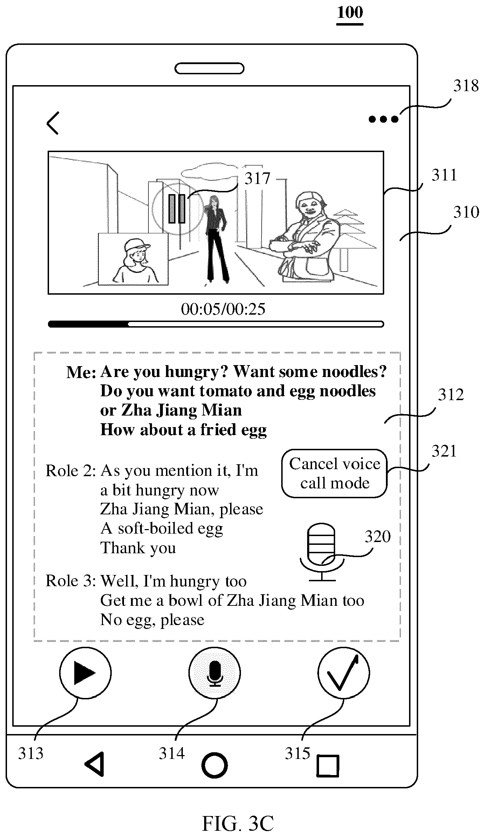

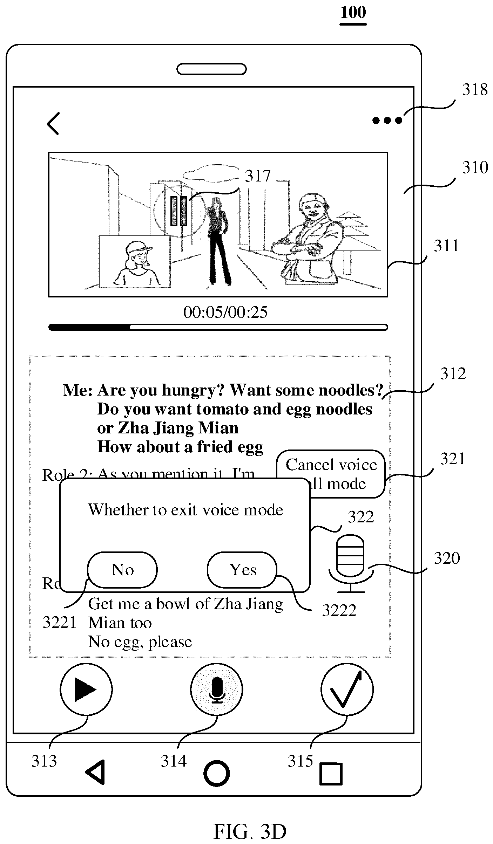

As shown in FIG. 3B, when the dubbing mode is paused, if the first terminal 100 detects an input operation such as a tap on the more-function control 318, the first terminal 100 displays the more-operation function box 319. The more-operation function box 319 includes a voice call function control 3191 and a dubbing playback function control 3192. When the first terminal 100 detects an input operation such as a tap on the voice call function control 3191, in response to the input operation, the first terminal 100 enters a voice call mode, and displays, in the dubbing interface 310, a voice control 320 and an exit control 321 shown in FIG. 3C. When the first terminal 100 detects an input operation on the voice control 320, the first terminal 100 collects a voice of a user in real time, and plays the voice of the user in the dubbing room in real time. When the first terminal 100 detects the input operation on the voice control 320 again, the first terminal 100 stops collecting and playing the voice of the user, and no longer grants a voice permission to the user of the first terminal 100. When the first terminal 100 detects, in the voice call mode, an input operation such as a tap on the exit control 321, the first terminal 100 displays, in the dubbing interface 310, a voice mode function block 322 shown in FIG. 3D.

As shown in FIG. 3D, the voice mode function block 322 includes a "Yes" control 3221 and a "No" control 3222. When the first terminal 100 detects an input operation such as a tap on the "Yes" control 3221, the first terminal 100 exits the voice call mode, and returns to the dubbing interface 310 shown in FIG. 3A.

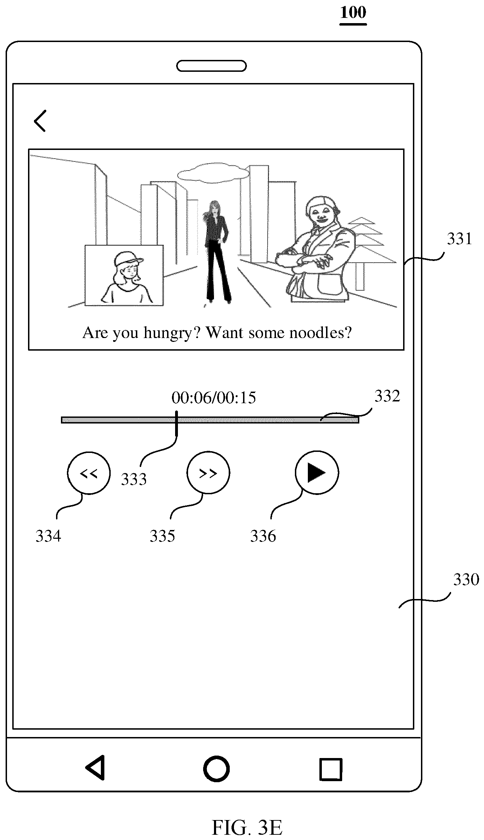

As shown in FIG. 3B, when the first terminal 100 detects an input operation such as a tap on the dubbing playback function control 321, the electronic device responds to the input operation and displays a dubbing playback interface 330 shown in FIG. 3E.

As shown in FIG. 3E, the dubbing playback interface 330 includes a dubbed work display area 331, a time progress bar 332, a progress dragging bar 333, a backward control 3 34, a forward control 335, and a play/pause control 336. The dubbed work display area 331 is used to play a dubbed video recorded by a user, and the progress dragging bar 333 is used to adjust a play progress of a dubbed work. When the first terminal 100 detects an input operation (for example, sliding left/sliding right) on the progress dragging bar 333, the dubbed work display area 331 displays an image frame of a dubbed video at a moment corresponding to the progress dragging bar 333 on the time progress bar 332. When the first terminal 100 detects an input operation such as a tap on the backward control 334, the first terminal 100 rewinds a play moment of the dubbed video on the time progress bar 332 by a preset time period. As shown in FIG. 3E, the play moment of the dubbed video on the time progress bar is 6s. When the first terminal 100 receives a tap operation performed by a user on the backward control 334, if the preset time period is 5s, a play progress of the dubbed video is 1s, that is, a current play moment of the dubbed video displayed on the time progress bar 332 is 1s. When the dubbed video is played, if the first terminal 100 detects an input operation such as a tap on the play/pause control 336, the first terminal 100 stops playing the dubbed video recorded by the user. When playing of the dubbed video is paused, if the first terminal 100 detects an input operation such as a tap on the play/pause control 336, the first terminal 100 plays the dubbed video recorded by the user. When the first terminal 100 detects an input operation such as a tap on the return control 336, the first terminal 100 returns to the dubbing interface 310 shown in FIG. 3A.

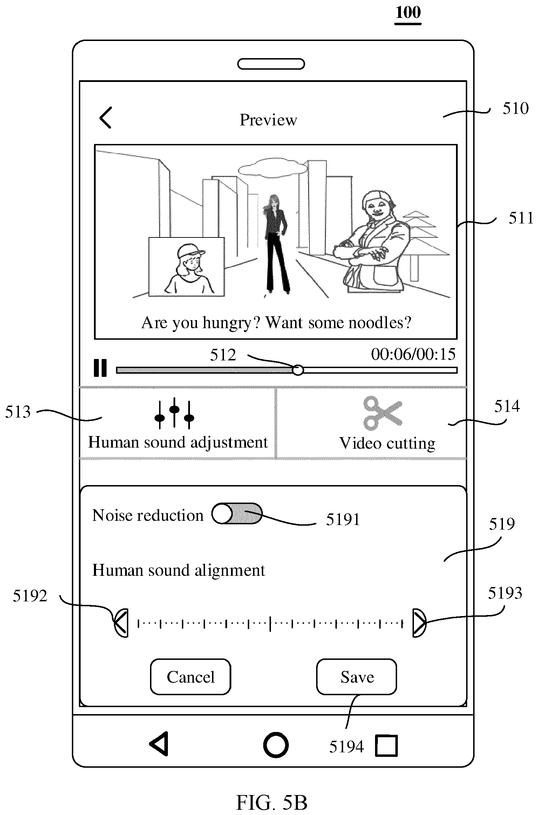

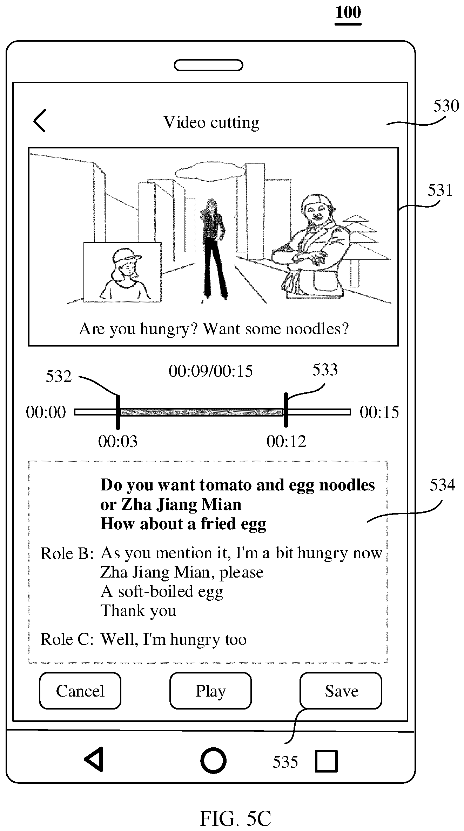

As shown in FIG. 5A, a preview interface 510 includes a dubbed video playing area 511, a progress adjustment control 512, a human sound adjustment function control 513, a video cutting function control 514, a human sound volume adjustment control 515, a background volume adjustment control 516, a re-recording control 517, and a work generation control 518. When the first terminal 100 displays the preview interface 510, the dubbed video playing area 511 starts to play a dubbed video. When the first terminal 100 detects an input operation (for example, sliding left/sliding right) on the progress adjustment control 512, the first terminal 100 adjusts a play progress of the dubbed video. Similarly, when the first terminal 100 detects an input operation such as sliding left/sliding right on the human sound volume adjustment control 515, the first terminal 100 increases/decreases volume of a dubbing role in the dubbed video. When the first terminal 100 detects an input operation such as sliding left/sliding right on the background volume adjustment control 516, the first terminal 100 increases/decreases background volume in the dubbed video. When the first terminal 100 detects an input operation such as a tap on the re-recording control 517, the first terminal 100 displays the dubbing interface 310 shown in FIG. 3A. In this case, a user in the dubbing room needs to perform dubbing again. When the first terminal 100 detects an input operation such as a tap on the human sound adjustment function control 513, the electronic device displays, in the preview interface 510, a human sound adjustment function box 519 shown in FIG. 5B. When the first terminal 100 detects an input operation such as a tap on the work generation control 518, the first terminal 100 uploads a dubbed work, and sends the dubbed work to a personal dubbing home page of a user participating in dubbing. When the first terminal 100 detects an input operation such as a tap on the video cutting function control 515, the first terminal 100 displays a video cutting interface 530 shown in FIG. 5C.

As shown in FIG. 5B, the human sound adjustment function box includes a noise reduction application icon 5191, a human sound backward icon 5192, and a human sound forward icon 5193. When the first terminal 100 detects an input operation such as a tap on the noise reduction application icon 5191, the first terminal 100 decreases volume of noise that is "non-human sound" in dubbed audio of a user (for example, noise in a surrounding environment during dubbing of the user), to ensure sound quality of a dubbed work. When the first terminal 100 detects an input operation such as a tap on the human sound backward icon 5192, the first terminal 100 adjusts audio of a dubbing role, so that the audio of the dubbing role is delayed relative to a corresponding subtitle and an image frame of a dubbed video. When the first terminal 100 detects an input operation such as a tap on the human sound forward icon 5193, the first terminal 100 adjusts audio of a dubbing role, so that the audio of the dubbing role is ahead of a corresponding subtitle and an image frame of a dubbed video. When the first terminal 100 detects an input operation such as a tap on the save control 5194, the first terminal 100 saves an adjusted dubbed video, and returns to the preview interface 510 shown in FIG. 5A.

As shown in FIG. 5C, the video cutting interface 530 includes a dubbed video playing area 531, a subtitle preview area 534, a first cutting control 532, and a second cutting control 533. When the first terminal 100 detects an input operation (for example, sliding left/sliding right) on the first cutting control 532/second cutting control 533, the first terminal 100 responds to the input operation to display, in the dubbed video playing area 531, an image frame at a corresponding moment of a dubbed video, where the corresponding moment is a corresponding moment of the first cutting control 532/second cutting control on the time progress bar. In addition, the first terminal 100 displays, in the subtitle preview area, a subtitle corresponding to the image frame. For example, in FIG. 5C, when the first terminal 100 detects that the first cutting control 532 is slid left to a moment 00:03 on the time progress bar, the first terminal 100 displays, in the dubbed video playing area 431, an image frame of a dubbed video at the moment 00:03, and displays, in the subtitle preview area 534, a subtitle corresponding to the image frame at the moment 00:03. In the foregoing manner, when a user cuts the dubbed video, the first terminal 100 displays, to the user, an image frame and a subtitle that are at a cutting start point (for example, 00:03 in FIG. 5C) and a cutting end point (for example, 00:12 in FIG. 5C) of the dubbed video, so that the user knows whether a dubbed video cutting point is determined as expected. When the first terminal 100 detects an input operation such as a tap on the save control 535, the first terminal 100 cuts a dubbed video by using a moment of the first cutting control 532 on the progress bar as a cutting start point and a moment of the second cutting control 533 on the progress bar as a cutting end point, and saves a cut dubbed video.

After the first terminal 100 detects an input operation such as a tap on the work generation control 518 in the preview interface 510, the first terminal 100 uploads a dubbed work to a personal dubbing home page 610 of a dubbing user shown in FIG. 6. When the first terminal 100 detects an input operation such as a tap on the Dub application icon 120 in the video main interface 120 in FIG. 1B, the first terminal 100 displays the personal dubbing home page 610 shown in FIG. 6. The personal dubbing home page 610 includes a user information bar 611, and the user information bar 611 includes a work information bar 6111, a friend information bar 6112, a followed information bar, and a favorites information bar. When the first terminal 100 detects an input operation (for example, a tap) on the dubbed work information bar 6111, the first terminal 100 displays a dubbed work of the user.

With reference to the accompanying drawings, the following describes in detail a video dubbing method provided in the embodiments of this application.

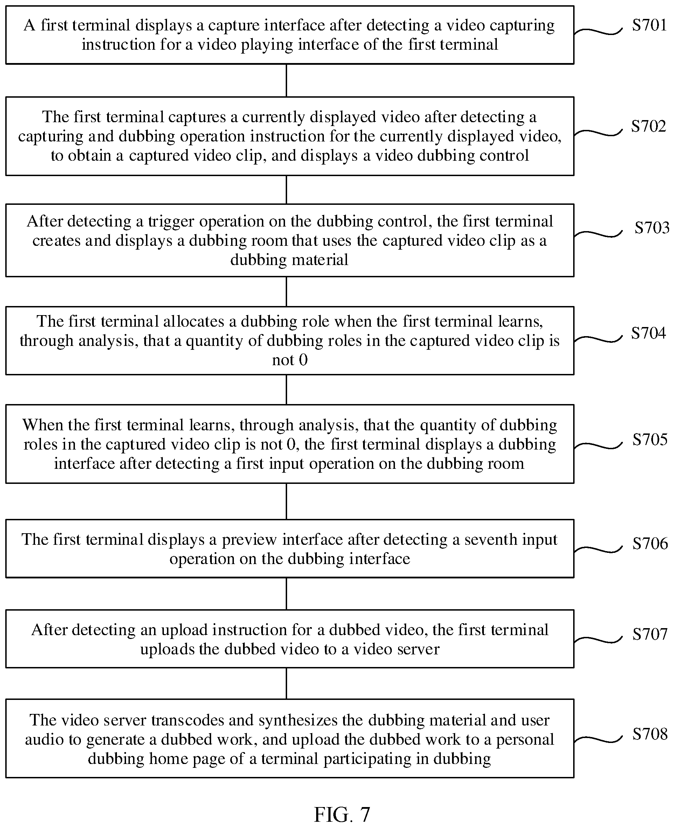

FIG. 7 is a flowchart of a video dubbing method according to an embodiment of this application. In the embodiment in FIG. 7, the first terminal captures a video in a video application of the first terminal to obtain a captured video clip, and dubs the captured video clip to obtain a dubbed work. Finally, the first terminal uploads the dubbed work to a personal dubbing home page of a user participating in dubbing. For example, the first terminal may be the first terminal 100 in the foregoing embodiment, and a second terminal may be the second terminal 200 in the foregoing embodiment. The following describes a video dubbing procedure in detail.

Step S701: The first terminal displays a capture interface after detecting a video capturing instruction for a video playing interface of the first terminal.

For example, the video capturing instruction may be an input operation (for example, a tap) on the video capturing control 153 in the video playing interface 150 in the embodiment in FIG. 1E; or may be a voice signal. For example, after receiving a voice instruction for capturing a video, a voice function module of the first terminal may identify and parse the audio by using an internal voice recognition module, and generate a trigger signal after completing the parsing, to trigger the first terminal to capture a video displayed in the video playing interface of the first terminal. In this embodiment of this application, a capturing and dubbing operation instruction is only described by using an example. A specific form of the capturing and dubbing operation instruction is not limited in this embodiment of this application. Display of the video playing interface 150 is unnecessarily triggered by using a process in FIG. 1A to FIG. 1D, and this is not limited in this embodiment of this application. The capture interface may be the video clip capturing interface 160 in the embodiment in FIG. 1F. A layout and a configuration of the capture interface are merely described by using an example and are not limited in this embodiment of this application.

Step S702: The first terminal captures a currently displayed video after detecting a capturing and dubbing operation instruction for the currently displayed video, to obtain a captured video clip, and displays a video dubbing control.

For example, the capturing and dubbing operation instruction may be an input operation (for example, a tap) on the first capture control 162/the second capture control 163 in the embodiment in FIG. 1F. For a process of capturing a video by the first terminal, refer to the embodiment in FIG. 1F. Details are not described again in this embodiment of this application.

The first terminal displays the video dubbing control after capturing the video and stores the captured video clip. For example, the video dubbing control may be the Dub application icon 172 in the embodiment in FIG. 1G. This is merely used as an example for description rather than a limitation in this embodiment of this application.

Step S703: The first terminal creates and displays a dubbing room for the captured video clip after detecting a trigger operation on the dubbing control.

For example, the trigger operation may be an input operation (for example, a tap) on the Dub application icon 172 in the embodiment in FIG. 1F. This is merely used as an example for description rather than a limitation in this embodiment of this application. An interface of the dubbing room may be the first interface of the dubbing room in the embodiment in FIG. 2A. This is merely used as an example for description rather than a limitation in this embodiment of this application.

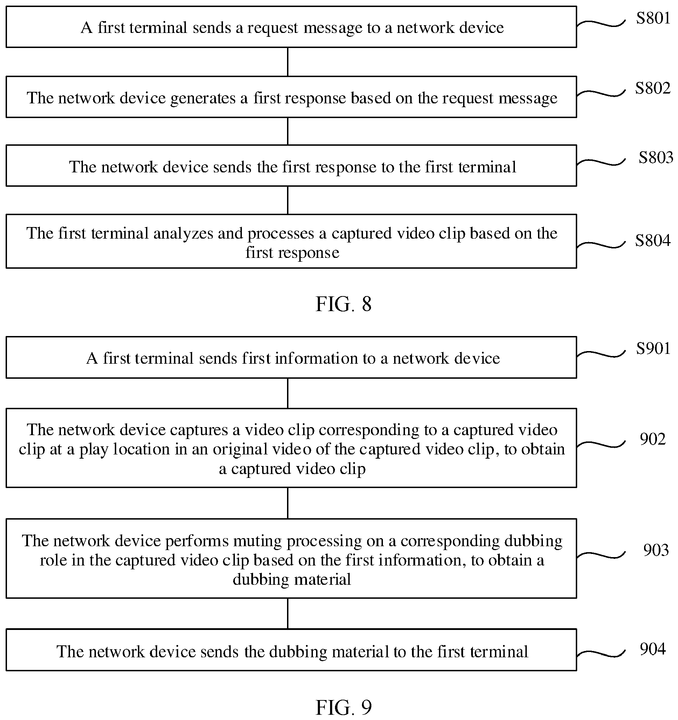

Specifically, a procedure of interaction between the first terminal and a network device after the first terminal creates the dubbing room may be shown in FIG. 8. The network device is a video server. The following describes the procedure in detail with reference to the accompanying drawings.

Step S801: The first terminal sends a request message to the network device.

Specifically, the request message includes an original video ID of the captured video clip, start time of the captured video clip, end time of the captured video clip, and a dubbing request. The start time of the captured video clip is start play time of the captured video clip in an original video, and the end time of the captured video clip is end play time of the captured video clip in the original video.

Step S802: The network device generates a first response based on the request message.

Specifically, after receiving the request message, the network device finds the original video from a video resource library by using the original video ID; then finds a play location (a play time period corresponding to the captured video clip in the original video) of the captured video clip in the original video based on the start play time of the captured video clip in the original video and the end play time of the captured video clip in the original video; and based on information (for example, role information and audio information) of the original video, use an Al module to analyze information about a dubbing role (for example, information such as a name of the role and a gender of the role) in a video at the play location and a quantity of dubbing roles. In addition, the network device generates a dubbing room ID in response to the dubbing request in the request message. The dubbing room ID is unique, and is used to distinguish between the dubbing room created by the first terminal from another dubbing room, to prevent the network device from incorrectly sending a message to another terminal device in a process of interaction between the first terminal and the network device. Then, the network device generates the first response. The first response includes information about a dubbing role, a dubbing room ID, and information about a quantity of dubbing roles.

Step S803: The network device sends the first response to the first terminal.

Step S804: The first terminal analyzes and processes the captured video clip based on the first response.

Specifically, after receiving the first response, the first terminal processes, in the following three cases, the captured video clip based on the information about the quantity of dubbing roles in the first response.

In a first case, when the quantity of dubbing roles is 0, the captured video clip cannot be used for dubbing and is an invalid video clip. The first terminal displays a prompt message in a display area such as a touchscreen of the first terminal, where the prompt message is used to indicate to a user that the captured video clip is unavailable. In this case, the first terminal may receive another video clip uploaded by the user or re-capture a video clip as a dubbing material.

In a second case, when the quantity of dubbing roles is 1, the dubbing room is a single-person dubbing room, and the first terminal cannot send a dubbing invitation link to another terminal device.

In a third case, when the quantity of dubbing roles is N (N>1), the first terminal may invite video application accounts of a maximum of (N-1) second terminals to access the dubbing room. When the first terminal detects a second input operation on the dubbing room, that is, when the first terminal receives an instruction for inviting a friend, the first terminal sends an invitation link to the second terminal. The invitation link is a second request message, and the second terminal is a terminal device corresponding to a friend in a friend list of a video application account of the first terminal. For example, a friend list interface of the video application account of the first terminal may be the friend list interface 220 in the embodiment in FIG. 2C. For a specific operation and process of inviting a friend by the first terminal, refer to specific content in the embodiments in FIG. 2A to FIG. 2C. Details are not described again in this embodiment of this application.

The friend list of the video application account of the first terminal may be a friend list in communication software such as WeChat or QQ, or may be a followed friend list in the friend list of the video application account. When the first terminal sends the invitation link to a friend list in third-party software such as WeChat, the second terminal may log in to a video application by using an account of the third-party software such as WeChat, to access the dubbing room created by the first terminal.

Step S704: The first terminal allocates a dubbing role when the first terminal learns, through analysis, that the quantity of dubbing roles in the captured video clip is not 0.

Specifically, when the quantity of dubbing roles is N (N>1), the first terminal allocates a dubbing role. There are mainly two manners of allocating a dubbing role.

In a first manner, the first terminal allocates a dubbing role to a video application account of a terminal accessing the dubbing room. For example, for content and a process of allocating a dubbing role by the first terminal, refer to content in the embodiments in FIG. 2D to FIG. 2E. Details are not described again in this embodiment of this application. After the first terminal allocates a dubbing role, the first terminal sends a notification message to the second terminal, so that a video application account of the second terminal knows the dubbing role corresponding to the video application account. Then, the first terminal generates first information used to indicate a correspondence between the dubbing role and a video application account of a terminal in the dubbing room, and sends the first information to the network device.

In a second manner, the first terminal grants, to a video application account of a terminal accessing the dubbing room, a permission to select a dubbing role. To be specific, the first terminal sends, to the second terminal, a second instruction that instructs a video application account of the second terminal to select a dubbing role. Each video application account can select only one dubbing role, and two or more video application accounts cannot select a same dubbing role. After selecting a dubbing role, the second terminal sends, to the first terminal, an acknowledgment message used to notify the first terminal of the dubbing role selected by the second terminal. Then, the first terminal generates, based on the acknowledgment message, first information used to indicate a correspondence between the dubbing role and a video application account of a terminal in the dubbing room, and sends the first information to the network device.

After the first terminal sends the first information to the network device, the network device performs a series of operations based on the first information, and finally sends a muted video clip as a processed dubbing material to the first device for dubbing. For specific content of a series of operations performed by the network device based on the first information, refer to FIG. 9. FIG. 9 is a diagram of a procedure for communication between a first terminal and a network device according to an embodiment of this application. The following describes the procedure in detail with reference to the accompanying drawings.

Step S901: The first terminal sends the first information to the network device.

Step S902: The network device captures a video clip corresponding to the captured video clip at the play location in the original video of the captured video clip, to obtain a captured video clip.

Step S903: The network device performs muting processing on a corresponding dubbing role in the captured video clip based on the first information, to obtain a dubbing material.

Specifically, the network device performs muting processing on a selected dubbing role in the captured video clip based on a correspondence that is in the first information and that is between the video account of the second terminal and the dubbing role in the captured video clip, to obtain the dubbing material. It should be noted that, when the quantity of dubbing roles in the captured video clip is N, if only (N-1) dubbing roles are allocated, the network device performs muting processing only on the (N-1) dubbing roles in the captured video clip.

Step S904: The network device sends the dubbing material to the first terminal.

When the quantity of dubbing roles is equal to 1, the first terminal does not need to allocate and select a dubbing role, and the network device automatically sends a muted captured video clip as a dubbing material to the first terminal.

Step S705: When the first terminal learns, through analysis, that the quantity of dubbing roles in the captured video clip is not 0, the first terminal displays a dubbing interface after detecting a first input operation on the dubbing room.

For example, the first input operation may be an input operation (for example, a tap) on the start dubbing control 215 in the embodiment in FIG. 2A, or may be an operation of inputting a voice instruction to the dubbing room. This is merely used as an example rather a limitation for description in this embodiment of this application. The dubbing interface may be the dubbing interface 310 in the embodiment in FIG. 3A. A layout and a configuration of the dubbing interface are merely described by using an example and are not limited in this embodiment of this application. In addition, after the first terminal detects the first input operation on the dubbing room, the second terminal accesses the dubbing room also displays the dubbing interface.

It should be noted that the first terminal is a primary device for creating a dubbing room. Compared with the second terminal, the first terminal has more operation permissions. For example, the first terminal has a permission to pause/start a dubbing mode, a permission to play back a dubbed video, and a permission to enable/disable a voice call mode. For example, as described in the embodiment in FIG. 3A, that the first terminal performs the permission to pause/start the dubbing mode may be that the first terminal enables/pauses the dubbing mode when detecting an input operation (for example, a tap) on the play/pause control 313. This is merely used as an example for description rather than a limitation in this embodiment of this application. In the dubbing mode, the first terminal and the second terminal collect external audio in real time, and play and display the dubbing material in first display boxes in the dubbing interfaces of the first terminal and the second terminal. In the dubbing mode, the first terminal pauses the dubbing mode after detecting a third input operation on the dubbing interface. The third input operation may be an input operation (for example, a tap) detected on the play/pause control 313 in the embodiment in FIG. 3A. This is merely used as an example for description rather than a limitation in this embodiment of this application.

For example, as described in the embodiment in FIG. 3B, that the first terminal performs the permission to enable/disable the voice call mode may be that the first terminal enables/disables the voice call mode when detecting an input operation (for example, a tap) on the voice call function control 3191. After enabling the voice call mode, the first terminal sends, to the second terminal accessing the dubbing room, a third instruction used to instruct the second terminal to enter the voice call mode. An interface of the voice call mode may be the dubbing interface 310 in the embodiment in FIG. 3C. This is merely used as an example for description rather than a limitation in this embodiment of this application. In the voice call mode, a terminal accessing the dubbing room may collect user audio in real time, and transmit the collected user audio to a voice call platform in the dubbing room in real time. The voice call platform sends the real-time user audio to all terminals accessing the dubbing room, to implement real-time voice communication between a plurality of users.

When the first terminal pauses the dubbing mode, the first terminal detects a fifth input operation on the dubbing interface to execute the permission to play back the dubbed video. For example, the fifth input operation may be an input operation such as a tap on the dubbing playback function control 3192 in the embodiment in FIG. 3B, or may be an input operation such as a voice instruction. This is merely used as an example for description rather than a limitation in this embodiment of this application. After detecting the fifth input operation, the first terminal displays a playback interface, where the playback interface includes a second display box for displaying a playing back a dubbed work. For example, the playback interface may be the dubbing playback interface 330 in the embodiment in FIG. 3E, and the second display box may be the dubbed work display area 331 in the embodiment in FIG. 3E. A shape of the second display box and a location layout of the second display box in the playback interface are merely described by using an example and are not limited in this embodiment of this application. After detecting a sixth input operation on the playback interface, the first terminal plays back, in the second display box, a first video clip and user audio that is collected in the dubbing mode by a terminal accessing the dubbing room. The sixth input operation is an input operation of playing back a dubbed video, the dubbing mode is a working mode in which a terminal device accessing the dubbing room plays a muted dubbing material in a dubbing interface of the terminal device and collects external audio in real time. The first video clip is a dubbed video clip in the dubbing material. For example, the sixth input operation may be an input operation (for example, sliding left/sliding right) on the progress dragging bar 333 in the embodiment in FIG. 3E; or may be an input operation (for example, a tap) on the backward control 334/forward control 335. This is merely used as an example for description rather than a limitation in this embodiment of this application. For a specific operation and process of playing back a dubbed work by the first terminal, refer to specific content in the embodiment in FIG. 3E. Details are not described herein again.

Step S706: The first terminal displays a preview interface after detecting a seventh input operation on the dubbing interface.

For example, the seventh input operation may be an input operation (for example, a tap) on the submit control 315 in the embodiment in FIG. 3A, or may be a voice input operation of a user. This is merely used as an example for description rather than a limitation in this embodiment of this application. The preview interface includes a third display box used to display a second video clip, where the second video clip is a dubbed video clip in the dubbing material. For example, the preview interface may be the preview interface 510 in the embodiment in FIG. 5A, and the third display box may be the video playing area 511. A layout and a configuration of the preview interface, a shape of the third display box, and a location layout of the third display box in the preview interface are merely described by using an example and are not limited in this embodiment of this application.

In a possible implementation, the first terminal displays a cutting interface after detecting an eighth input operation on the work preview interface, where the cutting interface includes a fourth display box used to play a cut second video clip. For example, the cutting interface may be the video cutting interface 530 in the embodiment in FIG. 5C. A layout and a configuration of the cutting interface are merely described by using an example and are not limited in this embodiment of this application. The fourth display box may be the dubbed video playing area 531 in the embodiment in FIG. 5C. A shape of the fourth display box and a location of the fourth display box in the cutting interface are merely described by using an example and are not limited in this embodiment of this application. After detecting a ninth input operation on the cutting interface, the first terminal performs the input operation to cut the second video clip and the user audio that is collected in the dubbing mode by the terminal accessing the dubbing room, to obtain a cut second video clip and cut audio. For example, the ninth input operation may be an input operation (for example, a tap) on the first cutting control 532/second cutting control 533 in the embodiment in FIG. 5C. The ninth input operation is merely described by using an example in this embodiment of this application, and another form of the ninth input operation is not limited in this embodiment of this application. For a specific process and content of cutting a dubbed video by the first terminal, refer to specific content in the embodiment in FIG. 5C. Details are not described again in this embodiment of this application.

In a possible implementation, after detecting a work adjustment operation on the preview interface, in response to the work adjustment operation, the first terminal adjusts and modifies the second video clip and the user audio that is collected in the dubbing mode by the terminal accessing the dubbing room, to obtain an adjusted and modified second video clip and adjusted and modified audio. For example, the work adjustment operation may be an input operation (for example, a tap) on the human sound adjustment function control 513 in the embodiment in FIG. 5A; or may be an input operation (for example, sliding left/sliding right) on the human sound volume adjustment control 515; or may be an input operation (for example, sliding left/sliding right) on the background volume adjustment control 516 or an input operation on another control. This is not limited in this embodiment of this application.

Step S707: After detecting an upload instruction for a dubbed video, the first terminal uploads the dubbed video to the network device.

Specifically, if the first terminal does not detect the eighth input operation or the work adjustment operation in the preview interface, the dubbed video is a video clip including the second video clip and the user audio that is collected in the dubbing mode by the terminal accessing the dubbing room; if the first terminal detects the eighth input operation in the preview interface, the video clip is a video clip including the cut second video clip and the cut audio; and if the first terminal detects the work adjustment operation in the preview interface, the dubbed video is a video clip including the adjusted and modified second video clip and the adjusted and modified audio. After detecting the upload instruction, the first terminal encodes the video and the audio in the dubbed video, and sends encoded video and audio to the network device in a form of a data stream. For example, the upload instruction may be an input operation (for example, a tap) on the work generation control 518 in the embodiment in FIG. 5A. This is merely used as an example for description rather than a limitation in this embodiment of this application.

Step S708: The network device transcodes and synthesizes the video and the audio in the dubbed video to generate a dubbed work, and uploads the dubbed work to a personal dubbing home page of a terminal participating in dubbing.

Specifically, after detecting a trigger operation of viewing a work on the personal dubbing home page, the terminal may display and play the dubbed work.

In this embodiment of this application, after detecting a capturing and dubbing operation instruction, the first terminal captures a video played in the video application of the first terminal. When a user wants to dub the captured video, the first terminal may create a dubbing room that uses the captured video as a dubbing material, so that the user can dub richer materials. In addition, the video dubbing method in this embodiment of this application supports real-time dubbing of a plurality of persons. When a quantity of dubbing roles is greater than 1, the first terminal may invite a friend to enter the dubbing room to perform real-time dubbing. Compared with a conventional method in which a plurality of persons sequentially perform dubbing, a user no longer speaks to the air during dubbing, thereby improving dubbing experience of the user.

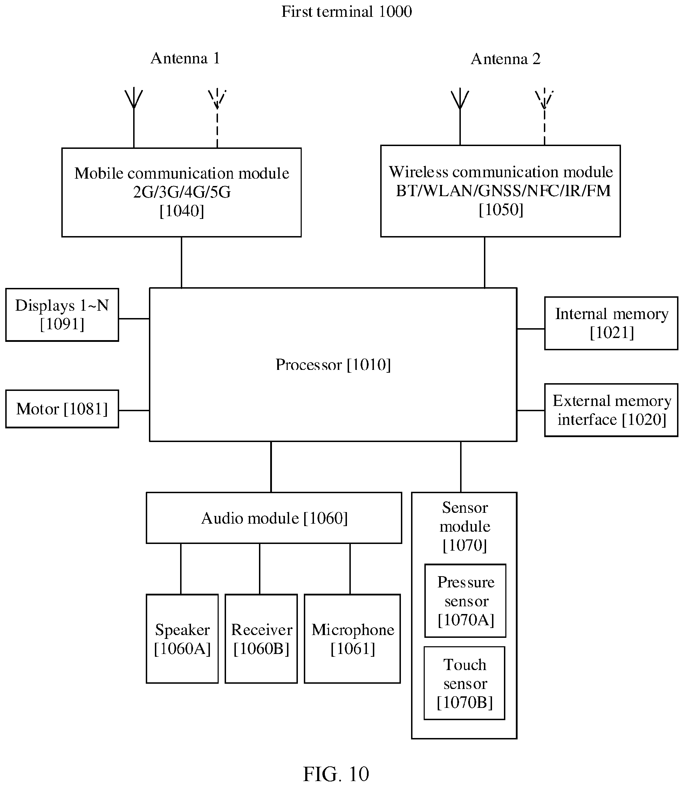

Next, a structure of a first terminal in an embodiment of this application is described. As shown in FIG. 10, a first terminal 1000 may include at least a processor 1010, an external memory interface 1020, an internal memory 1021, an antenna 1, an antenna 2, a mobile communication module 1040, a wireless communication module 1050, an audio module 1060, a speaker 1060A, a receiver 1060B, a microphone 1061, a sensor module 1070, a motor 1081, a display 1091, and the like. The sensor module 1070 may include a pressure sensor 1070A, a touch sensor 1070B, and the like.

It may be understood that the structure shown in this embodiment of the present invention does not constitute a specific limitation on the first terminal 1000. In some other embodiments of this application, the first terminal 1000 may include more or fewer components than those shown in the figure, or combine some components, or split some components, or have different component arrangements. The components shown in the figure may be implemented by hardware, software, or a combination of software and hardware.

The processor 1010 may include one or more processing units. For example, the processor 1010 may include an application processor (Application Processor, AP), a modem processor, a graphics processing unit (Graphics Processing Unit, GPU), an image signal processor (Image Signal Processor, ISP), a controller, a memory, a video codec, a digital signal processor (Digital Signal Processor, DSP), a baseband processor, a neural-network processing unit (Neural-network Processing Unit, NPU), and/or the like. Different processing units may be independent components, or may be integrated into one or more processors.

The controller may be a nerve center and a command center of the first terminal 1000. The controller may generate an operation control signal based on instruction operation code and a timing signal, to control instruction fetching and instruction execution.

A memory may be further disposed in the processor 1010, and is configured to store instructions and data. In some embodiments, the memory in the processor 1010 is a cache. The memory may store instructions or data just used or cyclically used by the processor 1010. If the processor 1010 needs to use the instructions or the data again, the processor 1010 may directly invoke the instructions or the data from the memory. This avoids repeated access and reduces waiting time of the processor 1010, thereby improving system efficiency.

In some embodiments, the processor 1010 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like.

The I2C interface is a two-way synchronous serial bus, and includes a serial data line (serial data line, SDA) and a serial clock line (derail clock line, SCL). In some embodiments, the processor 1010 may include a plurality of groups of I2C buses. The processor 1010 may be separately coupled to the touch sensor 1070B, a charger, a flash, and the like through different I2C bus interfaces. For example, the processor 1010 may be coupled to the touch sensor 1070B through the I2C interface, so that the processor 1010 communicates with the touch sensor 1070B through the I2C bus interface to implement a touch function of the first terminal 1000.

The I2S interface may be configured to perform audio communication. In some embodiments, the processor 1010 may include a plurality of groups of I2S buses. The processor 1010 may be coupled to the audio module 1060 by using the I2S bus, to implement communication between the processor 1010 and the audio module 1060. In some embodiments, the audio module 1060 may transmit an audio signal to the wireless communication module 1050 through the I2S interface, to implement a function of answering a call through a Bluetooth headset.

The PCM interface may also be configured to perform audio communication, and sample, quantize, and encode an analog signal. In some embodiments, the audio module 1060 may be coupled to the wireless communication module 1050 through the PCM bus interface. In some embodiments, the audio module 1060 may also transmit an audio signal to the wireless communication module 1050 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus, and converts to-be-transmitted data between serial communication and parallel communication. In some embodiments, the UART interface is usually configured to connect the processor 1010 to the wireless communication module 1050. For example, the processor 1010 communicates with a Bluetooth module in the wireless communication module 1050 through the UART interface, to implement a Bluetooth function. In some embodiments, the audio module 1060 may transmit an audio signal to the wireless communication module 1050 through the UART interface, to implement a function of playing music through a Bluetooth headset.

The MIPI interface may be configured to connect peripheral components such as the processor 1010 and the display 1091. The MIPI interface includes a display serial interface (Display Serial Interface, DSI). In some embodiments, the processor 1010 communicates with the display 1091 through the DSI interface, to implement a display function of the first terminal 1000.

The GPIO interface may be configured by using software. The GPIO interface may be configured as a control signal or may be configured as a data signal. In some embodiments, the GPIO interface may be configured to connect the processor 1010 to the display 1091, the wireless communication module 1050, the audio module 1060, the sensor module 1070, and the like. The GPIO interface may alternatively be configured as an I2C interface, an I2S interface, a UART interface, an MIPI interface, or the like.

It may be understood that an interface connection relationship between the modules shown in this embodiment of the present invention is merely used as an example for description, and does not constitute a limitation on the structure of the first terminal 1000. In some other embodiments of this application, the first terminal 1000 may alternatively use an interface connection manner different from that in the foregoing embodiment, or use a combination of a plurality of interface connection manners.

A wireless communication function of the first terminal 1000 may be implemented by using the antenna 1, the antenna 2, the mobile communication module 1040, the wireless communication module 1050, the modem processor, the baseband processor, and the like.

The antenna 1 and the antenna 2 are configured to transmit and receive an electromagnetic wave signal. Each antenna in the first terminal 1000 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 1040 may provide a solution for wireless communication including 2G/3G/4G/5G or the like applied to the first terminal 1000. The mobile communication module 1040 may include at least one filter, a switch, a power amplifier, a low noise amplifier (low noise amplifier, LNA), and the like. The mobile communication module 1040 may receive an electromagnetic wave through the antenna 1, perform processing such as filtering and amplification on the received electromagnetic wave, and transmit a processed electromagnetic wave to the modem processor for demodulation. The mobile communication module 1040 may further amplify a signal modulated by the modem processor, and convert the signal into an electromagnetic wave through the antenna 1 for radiation. In some embodiments, at least some functional modules of the mobile communication module 1040 may be disposed in the processor 1010. In some embodiments, at least some functional modules of the mobile communication module 1040 and at least some modules of the processor 1010 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 1060A, the receiver 1060B, and the like), or displays an image or a video through the display 1091. In some embodiments, the modem processor may be an independent component. In some other embodiments, the modem processor may be independent of the processor 1010, and is disposed in a same component with the mobile communication module 1040 or another functional module.

The wireless communication module 1050 may provide a solution for wireless communication including a wireless local area network (Wireless Local Area Network, WLAN) (such as a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC), and an infrared (Infrared, IR) technology, or the like applied to the first terminal 1000. The wireless communication module 1050 may be one or more components integrating at least one communication processing module. The wireless communication module 1050 receives an electromagnetic wave through the antenna 2, performs frequency modulation and filtering processing on an electromagnetic wave signal, and sends a processed signal to the processor 1010. The wireless communication module 1050 may further receive a to-be-sent signal from the processor 1010, perform frequency modulation and amplification on the signal, and convert the signal into an electromagnetic wave through the antenna 2 for radiation.

In some embodiments, in the first terminal 1000, the antenna 1 is coupled to the mobile communication module 1040, and the antenna 2 is coupled to the wireless communication module 1050, so that the first terminal 1000 can communicate with a network and another device by using a wireless communication technology. The wireless communication technology may include a global system for mobile communications (Global System For Mobile Communications, GSM), a general packet radio service (General Packet Radio Service, GPRS), code division multiple access (Code Division Multiple Access, CDMA), wideband code division multiple access (Wideband Code Division Multiple Access, WCDMA), time-division code division multiple access (Time-Division Code Division Multiple Access, TD-CDMA), Long Term Evolution (Long Term Evolution, LTE), BT, a GNSS, a WLAN, NFC, FM, an IR technology, and/or the like. The GNSS may include a global positioning system (Global Positioning System, GPS), a global navigation satellite system (Global Navigation Satellite System, GLONASS), a BeiDou navigation satellite system (BeiDou Navigation Satellite System, BDS), a quasi-zenith satellite system (Quasi-Zenith Satellite System, QZSS), and/or a satellite based augmentation system (Satellite Based Augmentation System, SBAS).

The first terminal 1000 implements a display function by using the GPU, the display 1091, the application processor, and the like. The GPU is a microprocessor for image processing, and is connected to the display 1091 and the application processor. The GPU is configured to perform mathematical and geometric calculation for image rendering. The processor 1010 may include one or more GPUs that execute program instructions to generate or change display information.

The display 1091 is configured to display an image, a video, and the like. The display 1091 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light-Emitting Diode, AMOLED), a flexible light-emitting diode (Flex Light-Emitting Diode, FLED), a mini-LED, a micro-LED, a micro-OLED, a quantum dot light-emitting diode (Quantum Dot Light-Emitting Diode, QLED), or the like. In some embodiments, the first terminal 1000 may include one or N displays 1091, where N is a positive integer greater than 1.

The digital signal processor is configured to process a digital signal, and may process another digital signal in addition to a digital image signal. For example, when the first terminal 1000 selects a frequency, the digital signal processor is configured to perform Fourier transformation or the like on frequency energy.

The video codec is configured to compress or decompress a digital video. The first terminal 1000 may support one or more video codecs. In this way, the first terminal 1000 can play or record videos in a plurality of coding formats, for example, moving picture experts group (Moving Picture Experts Group, MPEG)-1, MPEG-2, MPEG-3, and MPEG-4.

The NPU is a neural-network (neural-network, NN) computing processor, which quickly processes input information by referring to a structure of a biological neural network, for example, by referring to a transmission mode between human brain neurons, and may further continuously perform self-learning. Applications such as intelligent cognition of the first terminal 1000 may be implemented through the NPU, for example, image recognition, facial recognition, speech recognition, and text understanding.

The external memory interface 1020 may be configured to connect to an external storage card, for example, a micro SD card, to extend a storage capability of the first terminal 1000. The external storage card communicates with the processor 1010 through the external memory interface 1020, to implement a data storage function. For example, files such as music and videos are stored in the external storage card.

The internal memory 1021 may be configured to store computer-executable program code. The executable program code includes instructions. The processor 1010 runs instructions stored in the internal memory 1021 to perform various function applications of the first terminal 1000 and data processing. The internal memory 1021 may include a program storage area and a data storage area. The program storage area may store an operating system, an application program required by at least one function (for example, a sound playing function or an image playing function), and the like. The data storage area may store data (for example, audio data or a phone book) and the like created during use of the first terminal 1000. In addition, the internal memory 1021 may include a high-speed random access memory, and may further include a non-volatile memory, for example, at least one magnetic disk storage device, a flash memory, or a universal flash storage (universal flash storage, UFS).

The first terminal 1000 may implement audio functions, such as music playing, recording, or dubbing, by using the audio module 1060, the speaker 1060A, the receiver 1060B, the microphone 1061, the application processor, and the like.

The audio module 1060 is configured to convert digital audio information into an analog audio signal for output, and is also configured to convert an analog audio input into a digital audio signal. The audio module 1060 may be further configured to encode and decode an audio signal. In some embodiments, the audio module 1060 may be disposed in the processor 1010, or some functional modules of the audio module 1060 may be disposed in the processor 1010.

The speaker 1060A, also referred to as a "loudspeaker", is configured to convert an audio electrical signal into a sound signal. The first terminal 1000 may be used to listen to music or answer a hands-free call by using the speaker 1060A.

The receiver 1060B, also referred to as an "earpiece", is configured to convert an audio electrical signal into a sound signal. When the first terminal 1000 is used to answer a call or listen to a speech message, the receiver 1060B may be put close to a human ear to listen to a speech.

The microphone 1061, also referred to as a "mike" or a "mic", is configured to convert a sound signal into an electrical signal. When making a call or sending a speech message, a user may put the mouth close to the microphone 1061 to make a sound, to input a sound signal to the microphone 1061. At least one microphone 1061 may be disposed in the first terminal 1000. In some other embodiments, two microphones 1061 may be disposed in the first terminal 1000, to collect a sound signal and further implement a noise reduction function. In some other embodiments, three, four, or more microphones 1061 may alternatively be disposed in the first terminal 1000, to collect a sound signal, implement noise reduction, and identify a sound source, to implement a directional recording function and the like. In this embodiment of this application, the microphone 1061 may collect audio of a user in real time, so that the processor 1010 matches the audio of the user with a processed dubbing material.

The pressure sensor 1070A is configured to sense a pressure signal, and can convert the pressure signal into an electrical signal. In some embodiments, the pressure sensor 1070A may be disposed on the display 1091. There are a plurality of types of pressure sensors 1070A, such as a resistive pressure sensor, an inductive pressure sensor, and a capacitive pressure sensor. The capacitive pressure sensor may include at least two parallel plates made of conductive materials. When force is applied to the pressure sensor 1070A, capacitance between electrodes changes. The first terminal 1000 determines pressure intensity based on the change of the capacitance. When a touch operation is performed on the display 1091, the first terminal 1000 detects intensity of the touch operation based on the pressure sensor 1070A. The first terminal 1000 may also calculate a touch location based on a detection signal of the pressure sensor 1070A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The touch sensor 1070B is also referred to as a "touch panel". The touch sensor 1070B may be disposed on the display 1091. The touch sensor 1070B and the display 1091 form a touchscreen, which is also referred to as a "touch control screen". The touch sensor 1070B is configured to detect a touch operation performed on or near the touch sensor. The touch sensor may transfer the detected touch operation to the application processor to determine a type of a touch event, and may provide, by using the display 1091, a visual output related to the touch operation. In some other embodiments, the touch sensor 1070B may alternatively be disposed on a surface of the first terminal 1000 at a location different from that of the display 1091.

The motor 1081 may generate a vibration prompt. The motor 1081 may be configured to provide a vibration prompt for an incoming call, and may also be configured to provide a vibration feedback for a touch. For example, touch operations performed on different applications (for example, photographing and audio playing) may correspond to different vibration feedback effects. The motor 1091 may also correspond to different vibration feedback effects for touch operations performed in different areas of the display 1091. Different application scenarios (for example, a time reminder, information receiving, an alarm clock, and a game) may also correspond to different vibration feedback effects. A touch vibration feedback effect can be further customized.

For a structure of the second terminal, refer to the structure of the first terminal in the embodiment in FIG. 10. Details are not described again in the embodiments of this application.

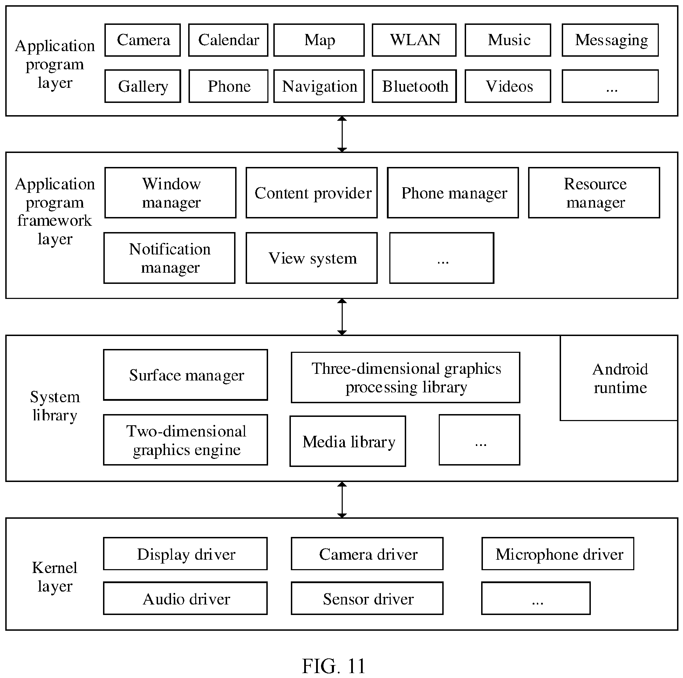

A software system of the first terminal 1000 may use a layered architecture, an event-driven architecture, a microkernel architecture, a microservice architecture, or a cloud architecture. In the embodiments of the present invention, an Android system with the layered architecture is used as an example to describe a software structure of the first terminal 1000. FIG. 11 is a block diagram of a software structure of a first terminal 1000 according to an embodiment of this application.

The layered architecture divides software into several layers, and each layer has a clear role and task. The layers communicate with each other through a software interface. In some embodiments, the Android system is divided into four layers from top to bottom: an application program layer, an application program framework layer, an Android runtime (Android runtime) and system library, and a kernel layer.

The application program layer may include a series of application program packages.

As shown in FIG. 11, the application program packages may include application programs such as Camera, Gallery, Calendar, Phone, Map, Navigation, WLAN, Bluetooth, Music, Videos, and Massaging.

The application program framework layer provides an application programming interface (Application Programming Interface, API) and a programming framework for an application program at the application program layer. The application program framework layer includes some predefined functions.

As shown in FIG. 11, the application program framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application program. The data may include a video, an image, audio, calls that are made and answered, a browsing history and bookmarks, a phone book, and the like.

The view system includes a visual control, such as a control for displaying text or a control for displaying a picture. The view system may be configured to construct an application program. A display interface may include one or more views. For example, a display interface including an SMS message notification icon may include a view for displaying text and a view for displaying a picture.

The phone manager is configured to provide a communication function of the first terminal 1000, for example, management of a call status (including answering, hanging up, or the like).

The resource manager provides various resources such as a localized character string, an icon, an image, a layout file, and a video file for an application program.

The notification manager enables an application program to display notification information in a status bar, and may be configured to convey a message of a notification type. The message can automatically disappear after a short stay without user interaction. For example, the notification manager is configured to notify download completion, give a message reminder, and the like. The notification manager may alternatively be a notification that appears in a top status bar of the system in a form of a graph or scroll bar text, for example, may be a notification of an application program running in the background, or may be a notification that appears on a screen in a form of a dialog window. For example, text information is prompted in the status bar, a prompt tone is played, an electronic device vibrates, or an indicator light blinks.

The Android runtime includes a kernel library and a virtual machine. The Android runtime is responsible for scheduling and managing the Android system.

The kernel library includes two parts: One part is a functional function that needs to be invoked by Java language, and the other part is a kernel library of Android.

The application program layer and the application program framework layer are run on the virtual machine. The virtual machine executes Java files at the application program layer and the application program framework layer as binary files. The virtual machine is configured to implement functions such as object lifecycle management, stack management, thread management, security and exception management, and garbage collection.

The system library may include a plurality of functional modules, for example, a surface manager (Surface Manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of application programs.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a working procedure of software and hardware of the first terminal 800 by using an example with reference to a video dubbing scenario.

When the touch sensor 1070B receives a touch operation, a corresponding hardware interruption is sent to the kernel layer. The kernel layer processes the touch operation into an original input event (including information such as touch coordinates and a time stamp of the touch operation). The original input event is stored at the kernel layer. The application program framework layer obtains the original input event from the kernel layer, and identifies a control corresponding to the input event. For example, the touch operation is a touch tap operation, and a control corresponding to the tap operation is the start dubbing control 215 in the embodiment in FIG. 2A. A video application invokes an interface at the application framework layer to start a dubbing function, and then invokes the kernel layer to start a microphone driver to collect user audio in real time by using the microphone, and match the user audio with a dubbing material.

A software system of the second terminal may use a layered architecture, an event-driven architecture, a microkernel architecture, or a microservice architecture. The implementations of this application may be randomly combined to implement different technical effects. For the software system of the second terminal, refer to the embodiment in FIG. 11. Details are not described again in the embodiments of this application.

All or some of the foregoing embodiments may be implemented by using software, hardware, firmware, or any combination thereof. When software is used for implementation, the embodiments may be entirely or partially implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible by a computer, or include one or more data storage devices such as a server and a data center that are integrated with a medium. The available medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures in the foregoing method embodiments are included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A video dubbing method, comprising:
capturing, by a first terminal, a currently displayed video after detecting a capturing and dubbing operation instruction for the currently displayed video, to obtain a captured video clip, and displaying a video dubbing control;
creating and displaying, by the first terminal, a dubbing room for the captured video clip after detecting a trigger operation on the video dubbing control; and
when the first terminal learns, through analysis, that a quantity of dubbing roles in the captured video clip is not 0, displaying, by the first terminal, a dubbing interface after detecting a first input operation on the dubbing room, wherein the dubbing interface comprises a first display box, and the first display box is used to display and play a dubbing material.

2. The method according to claim 1, after the creating and displaying, by the first terminal, a dubbing room for the captured video clip after detecting a trigger operation on the video dubbing control, comprising:
sending, by the first terminal, a request message to a network device, wherein the request message comprises an original video ID of the captured video clip, start time of the captured video clip, and end time of the captured video clip;
receiving, by the first terminal, a first response sent by the network device, wherein the first response comprises information about a quantity of dubbing roles; and
performing, by the first terminal, a first operation based on the dubbing role information.

3. The method according to claim 2, wherein the performing, by the first terminal, a first operation based on the dubbing role information comprises:
displaying, by the first terminal, first prompt information if the quantity of dubbing roles is 0, wherein the first prompt information is used to indicate that the captured video clip is unavailable; or
if the quantity of dubbing roles is greater than 1, sending, by the first terminal, a first instruction to a second terminal after detecting a second input operation on the dubbing room, wherein the first instruction is used to instruct a video application account of the second terminal to access the dubbing room; and
when the video application account of the second terminal accesses the dubbing room, allocating, by the first terminal, a dubbing role and generating first information, wherein the first information is used to indicate a correspondence between the dubbing role and a video application account of a terminal accessing the dubbing room;
sending, by the first terminal, the first information to the network device; and
receiving, by the first terminal, the dubbing material sent by the network device, wherein the dubbing material is obtained by the network device based on the first information.

4. The method according to claim 3, wherein the allocating, by the first terminal, a dubbing role and generating first information comprises:
binding, by the first terminal, the dubbing role to a video application account of a terminal accessing the dubbing room;
generating, by the first terminal, the first information, wherein the first information is used to indicate a correspondence between the dubbing role and a video application account of a terminal accessing the dubbing room; and
sending, by the first terminal, a notification message to the second terminal, wherein the notification message is used to indicate a dubbing role allocated to the video application account of the second terminal.

5. The method according to claim 3, wherein the allocating, by the first terminal, a dubbing role and generating first information comprises:
sending, by the first terminal, a second instruction to the second terminal, wherein the second instruction is used to instruct the video application account of the second terminal to select a dubbing role;
receiving, by the first terminal, an acknowledgment message sent by the second terminal, wherein the acknowledgment message is used to indicate a dubbing role selected by the second terminal; and
generating, by the first terminal, the first information based on the acknowledgment message, wherein the first information is used to indicate a correspondence between the dubbing role and a video application account of a terminal accessing the dubbing room.

6. The method according to any one of claims 3 to 5, after the performing, by the first terminal, a first operation based on the dubbing role information, comprising:
pausing, by the first terminal, a dubbing mode after detecting a third input operation on the dubbing interface, wherein the dubbing mode is that the first terminal collects external audio in real time as dubbing audio and plays the dubbing material in the first display box; and
when the dubbing mode is paused, sending, by the first terminal, a third instruction to the second terminal if the first terminal detects a fourth input operation on the dubbing interface, wherein the third instruction is used to instruct the video application account of the second terminal to enter a voice call mode.

7. The method according to any one of claims 3 to 5, after the performing, by the first terminal, a first operation based on the dubbing role information, comprising:
pausing, by the first terminal, a dubbing mode after detecting a third input operation on the dubbing interface, wherein the dubbing mode is that the first terminal collects external audio in real time as dubbing audio and plays the dubbing material in the first display box;
when the dubbing mode is paused, displaying, by the first terminal, a playback interface if the first terminal detects a fifth input operation on the dubbing interface, wherein the playback interface comprises a second display box; and
after detecting a sixth input operation on the playback interface, playing back, by the first terminal in the second display box, a first video clip and external audio that is collected by the first terminal and the second terminal in real time in the dubbing mode, wherein the first video clip is a dubbed video clip in the dubbing material.

8. The method according to any one of claims 3 to 7, after the displaying, by the first terminal, a dubbing interface after detecting a first input operation on the dubbing room, comprising:
displaying, by the first terminal, a preview interface after detecting a seventh input operation on the dubbing interface, wherein the preview interface comprises a third display box, the third display box is used to display a second video clip, and the second video clip is a dubbed video clip in the dubbing material;
displaying, by the first terminal, a cutting interface after detecting an eighth input operation on the preview interface, wherein the cutting interface comprises a fourth display box, and the fourth display box is used to display the cut second video clip; and
cutting, by the first terminal after detecting a ninth input operation on the cutting interface, the second video clip and the external audio that is collected by the first terminal and the second terminal in real time in the dubbing mode.

9. A video dubbing method, comprising:
receiving, by a network device, a request message sent by a first terminal, wherein the request message comprises an original video ID of a captured video clip, start time of the captured video clip, and end time of the captured video clip;
finding, by the network device, an original video of the captured video clip from a video resource library based on the original video ID of the captured video clip;
obtaining, by the network device, a play location of the captured video clip in the original video based on the start time of the captured video clip and the end time of the captured video clip;
analyzing, by the network device, a dubbing role in the captured video based on the play location of the captured video clip in the original video, and obtaining information about a quantity of dubbing roles;
generating, by the network device, a first response based on the information about the quantity of dubbing roles; and
sending, by the network device, the first response to the first terminal.

10. The method according to claim 9, after the generating, by the network device, a first response based on the dubbing role information, comprising:
receiving, by the network device, first information sent by the first terminal, wherein the first information is used to indicate a correspondence between the dubbing role and a video application account of a terminal accessing a dubbing room;
capturing, by the network device, a video clip corresponding to the captured video clip at the play location in the original video of the captured video clip, to obtain a captured video clip;
performing, by the network device, muting processing on an allocated dubbing role in the captured video clip based on the first information, to obtain a processed dubbing material; and
sending, by the network device, the processed dubbing material to the first terminal.

11. A video dubbing method, comprising:
receiving, by a second terminal, a first instruction sent by a first terminal, wherein the first instruction is used to instruct a video application account of the second terminal to access a dubbing room created by the first terminal; and
enabling, by the second terminal in response to the first instruction, the video application account of the second terminal to access the dubbing room created by the first terminal.

12. The method according to claim 11, after the accessing, by the second terminal in response to the second request message, the dubbing room created by the first terminal, comprising:
receiving, by the second terminal, a notification message sent by the first terminal, wherein the notification message is used to indicate a dubbing role allocated to the video application account of the second terminal.

13. The method according to claim 11, after the accessing, by the second terminal in response to the second request message, the dubbing room created by the first terminal, comprising:
receiving, by the second terminal, a second instruction sent by the first terminal, wherein the second instruction is used to instruct the video application account of the second terminal to select a dubbing role; and
sending, by the second terminal, an acknowledgment message to the first terminal, wherein the acknowledgment message is used to indicate a dubbing role selected by the video application account of the second terminal.

14. The method according to claim 11, after the enabling, by the second terminal in response to the first instruction, a user account of a video application of the second terminal to access the dubbing room created by the first terminal, further comprising:
receiving, by the second terminal, a third instruction sent by the first terminal, wherein the third instruction is used to instruct the video application account of the second terminal to enter a voice call mode; and
enabling, by the second terminal in response to the third instruction, the video application account of the second terminal to enter the voice call mode.

15. A terminal, comprising: a memory, a processor, a communication module, and a touchscreen, wherein
the touchscreen is configured to display content;
the communication module is configured to communicate with another terminal or network device;
the memory is configured to store a computer program, and the computer program comprises program instructions; and
the processor is configured to invoke the program instructions, so that the terminal performs the method according to any one of claims 1 to 8.

16. A network device, comprising a memory, a processor, and a communication module, wherein
the communication module is configured to communicate with another terminal or network device;
the memory is configured to store a computer program, and the computer program comprises program instructions; and
the processor is configured to invoke the program instructions, so that the network device performs the method according to any one of claims 9 and 10.

17. A terminal, comprising: a memory, a processor, a communication module, and a touchscreen, wherein
the touchscreen is configured to display content;
the communication module is configured to communicate with another terminal or network device;
the memory is configured to store a computer program, and the computer program comprises program instructions; and
the processor is configured to invoke the program instructions, so that the terminal performs the method according to any one of claims 11 to 14.

18. A computer-readable storage medium, wherein the computer-readable storage medium stores a computer program, and when the computer program is executed by a processor, the method according to any one of claims 1 to 14 is implemented.
